# EUROPÄISCHE PATENTSCHRIFT

(11) **EP 4 172 556 B1**
(45) Veröffentlichungstag und Bekanntmachung des Hinweises auf die Patenterteilung: **27.03.2024**
(21) Anmeldenummer: 21701121.2
(22) Anmeldetag: 19.01.2021
(51) Int. Cl.: G01B 11/00

(54) **VORRICHTUNG ZUR LAGE- UND POSITIONSERKENNUNG VON MARKIERUNGEN UND COMPUTERPROGRAMMPRODUKT**
APPARATUS FOR DETECTING THE LOCATION AND POSITION OF MARKINGS, AND COMPUTER PROGRAM PRODUCT
APPAREIL DE DÉTECTION DE L'EMPLACEMENT ET DE LA POSITION DE REPÈRES, ET PRODUIT-PROGRAMME INFORMATIQUE

(30) Priorität: 25.06.2020 DE 202020103679 U
(43) Veröffentlichungstag der Anmeldung: 03.05.2023
(73) Patentinhaber: soft2tec GmbH, 65428 Rüsselsheim (DE)
(72) Erfinder: GILSON, Laurent, 65719 Hofheim am Taunus (DE); BRÜNING, Wolfgang, 61130 Nidderau (DE); HONISCH, Frank, 65428 Rüsselsheim (DE)
(74) Vertreter: Keil & Schaafhausen Patentanwälte PartGmbB
(86) Internationale Anmeldenummer: PCT/EP2021/051087
(87) Internationale Veröffentlichungsnummer: WO 2021/259523

(56) Entgegenhaltungen:
- DE-A1-102015 013 551
- DE-A1-102019 114 531
- US-A1- 2010 014 750
- US-A1- 2012 262 487

## Beschreibung

Es wird eine Vorrichtung zur Lage- und Positionserkennung von Markierungen im dreidimensionalen Raum nach dem Oberbegriff des Anspruchs 1 beschrieben mit
- mindestens einer Markiereinheit, die insbesondere an einem Objekt festlegbar ist, mit mehreren Markierungen,
- einer optischen Bilderfassungseinheit, die zur Aufnahme von Bildern der Markiereinheit () eingerichtet ist, und
- mit einer Auswerteeinheit, die zur eindeutigen Bestimmung der Lage und der Position der Markiereinheit eingerichtet ist,
wobei die Markiereinheit mindestens fünf Markierungen zur Lage- und Positionsbestimmung aufweist.

Die vorgeschlagene Markiereinheit weist mindestens fünf Markierungen (im Sinne optisch aktiver Markierungen) zur Lage- und Positionsbestimmung auf, von denen vorzugsweise mindestens vier der Markierungen in einer gemeinsamen Ebene liegen und vorzugsweise mindestens eine der Markierungen außerhalb dieser Ebene liegt. Es sind jedoch grundsätzlich aus Ausführungen denkbar, in der alle fünf optischen Markierungen in einer gemeinsamen Ebene liegen.

Aus den Druckschriften US 2010/014750 A1, US 2012/262487 A1, EP 1 813 911 A1, US 2005/0201613 A1, EP 1 498 688 B1, WO 2004/ 114 112 A1, US 2008/0111985 A1, WO 2006/ 069 748 A1, US 5 227 985 A, US 7 742 895 B2 und DE 10 2014 012 693 B4 sind Systeme und Verfahren bekannt, die mittels Aufnahme einer an dem Objekt festgelegten Markiereinheit die Lage und Position eines Objekts im Raum bestimmen können. Dazu sind auf der Markiereinheit optisch aktive, d.h. selbst leuchtende, oder optisch passive, d.h. Licht reflektierende Markierung in einer festen geometrischen Anordnung vorgesehen. Es sind viele unterschiedliche Anordnungen zur Auswertung möglich. Die meisten der vorgeschlagenen Anordnung sehen mindestens vier Markierungen vor, von den mindestens drei Markierungen eine Ebene aufspannen und mindestens eine Markierung außerhalb dieser Ebene liegt. Die mindestens drei in einer Ebene angeordneten Markierungen können auf mindestens zwei nicht parallelen Geraden liegen, die die Ebene aufspannen. Eine solche Anordnung der Markierungen ermöglicht eine zuverlässige Lage- und Positionsbestimmung der Markiereinheit im Raum aus einem einzigen aufgenommenen zweidimensionalen Bild der Markiereinheit, die mittels einer optischen Bilderfassungseinheit (bspw. einer Kamera, insbesondere einer digitalen Kamera) aufgenommen wird.

Die DE 10 2014 012 693 B4 beschreibt ein zuverlässig arbeitendes, aber aufwendiges System und Verfahren. Die Positions- und Lagebestimmung erfolgt auf der Basis eines einzigen zweidimensionalen Bildes einer mit mindestens sieben Markierungen versehenen Markierungsanordnung, die an dem Objekt angebracht wird. Das System umfasst ferner eine Bilderfassungseinheit zur Aufnahme eines zweidimensionalen Bildes des Objekts bzw. der am Objekt angeordneten Markierungsanordnung und eine Auswerteeinheit zur eindeutigen Bestimmung der Lage und der Position des Objekts auf der Basis des aufgenommenen Bildes. Die sieben Markierungen der Markierungsanordnung stehen in einer fest vorgegebenen räumlichen Beziehung zueinander, wobei sechs dieser Markierungen eine Ebene bilden, während die siebte Markierung außerhalb bzw. beabstandet von jener Ebene angeordnet ist. Die sechs Markierungen sind in Gruppen eingeteilt, die auf zwei verschiedenen Geraden liegen, die sich in einem Winkel von 90°, schneiden. Die erste Gerade umfasst zumindest vier Markierungen, und die zweite Gerade umfasst zumindest zwei weitere Markierungen. Die siebte Markierung außerhalb der Ebene liegt in einer Draufsicht auf die Ebene auch auf dieser ersten Geraden, und zwar auf einer Seite der zweiten Gerade, die zumindest zwei Markierungen der ersten Gerade abgewandt ist.

Dies ist für eine eindeutige Zuordnung der Bildmarkierungen, d.h. der in dem Bild abgebildeten Markierungen, und damit der Rekonstruktion von Lage und Position der Markierungen im Raum wichtig. Bei der Auswertung werden mehrere Homografien für mögliche Zuordnungen berechnet. Aus diesen Homografien wird jeweils eine Lagebestimmung rekonstruiert. Aufbauend hierauf wird für jede Lagebestimmung der durchschnittliche Reprojektionsfehler (im Vergleich zu der bekannten tatsächlichen Anordnung der Markierungen auf der Markierungsanordnung) für sämtliche Bildmarkierungen berechnet. Diejenige Homografie, die den geringsten Fehler aufweist, ist die zutreffende und wird für die eindeutige Lagebestimmung verwendet.

Diese Auswertung führt in der Praxis zu guten Ergebnissen, ist aber sehr aufwendig im Hinblick auf die Bildauswertung und Rechenleistung des Systems, insbesondere durch die Notwendigkeit, mehr als eine Homografie zu berechnen und durch jeweils Anwendung eines Levenberg-Marquardt-Lösers eine Lage zu schätzen. Ferner werden Reproduktionsfehler für die koplanaren Markierungen und die nicht koplanare Markierungen berechnet und die übereinstimmenden Minima für die Lageauswertung herangezogen. Diese aufwendige Berechnung, und insbesondere die Berücksichtigung der hohen Anzahl von Markierungen, führt zu Problemen beim Live-Tracking von schnell bewegten Objekten, weil die Rechenleistung von in der Praxis eingesetzten Systemen nicht ausreicht, insbesondere wenn in einem System nicht nur eine Markierungsanordnung überwacht wird, sondern eine Mehrzahl von Markierungsanordnungen, ggf. sogar in einem Bild.

Theoretisch kann zwar jede Markierungsanordnung von anderen in dem Bild erfassten Markierungsanordnungen durch verschiedene Kennzeichnungen unterschieden werden. Die Auswertung der Umgebung der Markierungsanordnung im Bild führt aber beim Tracking von bewegten Objekten regelmäßig zu Mehrdeutigkeiten, wenn diese Markierungen (bspw. in Form von Aufklebern) optisch im Bild nicht genau erkennbar sind. Grundsätzlich wäre es auch denkbar, die Markierungen auf den Markierungsanordnungen geometrisch unterschiedlich anzuordnen. Dies führt aber zu der schon komplexen Auswertung vieler Markierungen.

Im industriellen Umfeld ist es wünschenswert, bisweilen die Lage und Position von Markierungseinheiten sehr schnell bestimmen zu können, um - gerade in Produktionslinien - real-time Anwendungen nutzen zu können. Dafür muss die Auswertung der Kamerabilder und die Lage- und Positionsbestimmung so schnell erfolgen, dass eine Anwendung direkt im Produktionsablauf, bspw. zur Bewegungskontrolle, verwendet werden kann. Ebenso ist es wünschenswert den Energiebedarf solcher, teils batteriebetriebenen, Markierungsanordnungen zugunsten langer Laufzeiten zu begrenzen.

Daher ist es Aufgabe der Erfindung für ein System zur Lage- und Positionserkennung der eingangs genannten Art eine vereinfachte Möglichkeit zur Lage- und Positionserkennung von Markiereinheiten zur Verfügung zu stellen, die die Erkennung unterschiedlicher Markiereinheiten in einem Bild ermöglicht, wobei die Markiereinheiten selbst möglichst energiesparsam betreibbar sein sollen.

Diese Aufgabe wird erfindungsgemäß durch eine Vorrichtung mit den Merkmalen des Anspruchs 1 gelöst. Dazu ist insbesondere vorgesehen, dass die Markiereinheit mindestens ein Kommunikationselement zur Kodierung der Markiereinheit aufweist, das keine Markierung ist. Zur Lage- und Positionsbestimmung werden die Kommunikationselemente erfindungsgemäß nicht berücksichtigt. Dadurch wird die Anzahl der zur Lage- und Positionserkennung verwendeten Markierungen signifikant reduziert. Dies führt zu einer Beschleunigung der Lage- und Positionserkennung.

Erfindungsgemäß ist die Bilderfassungseinheit dazu eingerichtet, ein Bild der Markiereinheit mit den Markierungen und dem mindestens einen Kommunikationselement aufzunehmen, wobei die in einem System installierten und verwendeten Markiereinheiten erfindungsgemäß dazu eingerichtet sind, dass ausgewählte (optisch aktive) Kommunikationselemente aus einer Vielzahl von (optisch grundsätzlich aktivierbaren) Kommunikationselementeinrichtungen tatsächlich optisch aktiv sind. Gemäß einer besonders bevorzugten Ausführungsform können die ausgewählten Kommunikationselemente, d.h. die optisch aktivierten bzw. eingeschalteten Kommunikationselementeinrichtungen, im Betrieb nicht verändert werden. So wird verhindert, dass die in der Auswerteinheit bekannten Markiereinheiten mit unterscheidbaren Kommunikationselementen verändert werden.

Die Auswerteeinheit ist ferner dazu eingerichtet, in dem aufgenommenen Bild aus den Markierungen die Lage und Position der Markiereinheit zu bestimmen und aus dem mindestens einen Kommunikationselement eine Identität der Markiereinheit zu bestimmen.

Bei einer Vorrichtung mit mehreren Markiereinheiten, die in der Vorrichtung (im Sinne eines Systems mit mehr als einer Markiereinheit) gleichzeitig betreibbar sind bzw. betrieben werden (d.h. z.B. abgesehen von bspw. Ersatz-Markierungseinheiten) ist erfindungsgemäß besonders bevorzugt vorgesehen, dass alle Markiereinheiten anhand verschieden angeordneter Kommunikationselemente unterscheidbar sind. Dazu kann erfindungsgemäß vorgesehen sein, dass die Markiereinheit eine Mehrzahl von (grundsätzlich aktivierbaren) Kommunikationselementeinrichtungen aufweist, die an unterscheidbaren Positionen der Markiereinheit angeordnet sind. In einer Vorrichtung betreibbare oder betriebene (d.h. in der Vorrichtung installierte) Markiereinheiten sind dann erfindungsgemäß so eingerichtet, dass diese Anhand der verschiedenen Kommunikationselementen (d.h. den optisch aktiven Kommunikationselementeinrichtungen) unterscheidbar sind. Bevorzugte Ausführungsvorformen der Erfindung sehen sieben oder acht an unterscheidbaren Positionen der Markiereinheit angeordnete Kommunikationselementeinrichtungen vor, von denen bei einer in der Vorrichtung installierten Markiereinheiten eine, zwei oder drei als Kommunikationselemente aktiviert sind. Die Anzahl der vorhandenen Kommunikationselementeinrichtungen ist aber grundsätzlich variierbar.

In einer weiter erfindungsgemäß bevorzugten Ausführungsform sind genau fünf Markierungen in einer Markiereinheit vorgesehen. Die Praxis hat gezeigt, dass die Lage- und Position von Markiereinheiten mit genau fünf Markierungen auch im industriellen Umfeld gut und schnell ermittelbar ist. Eine größere Anzahl von Markierungen verlangsamt die Erkennungsgeschwindigkeit der Algorithmen spürbar und führt auch zu einem erhöhten Energiebedarf.

Die Auswertegeschwindigkeit kann gemäß einer weiter bevorzugten Ausführungsart der Erfindung ferner dadurch beschleunigt werden, dass bei Vorrichtungen mit mehr als einer Markiereinheit die Markierungen aller Markiereinheiten an derselben Position der Markiereinheiten angeordnet sind. Hierdurch lassen sich die Algorithmen beschleunigen, weil bei der Erkennung eine immer gleiche Anordnung verwendet werden kann und die Logik des Algorithmus auf genau diese Anordnung optimiert ist.

Der Auswerteeinheit sind die Positionen der Markierungen auf der Markiereinheit erfindungsgemäß bekannt, unabhängig davon, wie viele Markierungen vorgesehen sind oder ob die Markierungen auf allen (verschiedenen) Markiereinheiten des Systems an denselben Positionen angeordnet sind.

Unter Markierungen und Kommunikationselementen werden jeweils optisch aktive Einrichtungen verstanden, die durch die Bilderfassungseinheit aufnehmbar und in dem Bild sichtbar sind. Die Markierungseinrichtungen und die Kommunikationselementeinrichtungen sind vorzugsweise aktivierbare, d.h. ein- und ausschaltbare, Leuchtmittel, wie optische Leuchtdioden oder besonders bevorzugt IR-Leuchtdioden. Die Bilderfassungseinheit, vorzugweise eine Kamera, ist dazu eingerichtet, diese optisch aktivierten Leuchtmittel aufzunehmen, d.h. die Markierungen und die Kommunikationselemente. Nicht angeschaltete Leuchtmittel dienen nicht als Markierungen respektive Kommunikationselemente. Diese sind in den Bildern meist nicht oder nicht zuverlässig erkennbar; entsprechend sind die Bildaufnahmeeinrichtung und die Auswerteeinheit nicht dazu einrichtet, ausgeschaltete (nicht aktivierte) Markierungseinrichtungen und Kommunikationselemente zu aufzunehmen respektive in den Bildern zu erkennen. Entsprechend können auf den Markiereinheiten mehr Markierungseinrichtungen und/oder Kommunikationselementeinrichtungen vorgesehen sein, die grundsätzlich aktivierbar wären. Die Markiereinheiten sind jedoch dazu eingerichtet, nur bestimmte ausgewählte Markierungseinrichtungen zu aktivieren, d.h. anzuschalten, so dass in einem installierten System eine feste Anordnung der Markierungen vorliegt, die nicht änderbar ist. Deaktivierte Markierungseinrichtungen und Kommunikationselementeinrichtungen sind funktionslos und im Sinne der Erfindung nicht vorhanden.

Die ausgewählten Markierungseinrichtungen bilden im Sinne der Erfindung also die nicht änderbaren Markierungen, die für die Lage- und Positionsbestimmung verwendet werden. Sie können in einem installierten System nicht eingeschaltet (aktiviert) werden, so dass Sie keine Markierungen im Sinne der Erfindung sind und bei der Lage- und Positionsermittlung nicht verwendet werden und werden können. Dies ist wichtig, weil die Auswerteinheit für eine spezielle Anordnung der Markierungen optimiert ist, um schnell und zuverlässig eine Lage- und Positionserkennung durchführen zu können, so dass auch Echtzeitanwendungen realisierbar sind. Die Markiereinheiten sind mit anderen so eingerichtet, dass alle dieselben Markierungen in derselben Anordnung aufweisen und im installierten System nicht änderbar sind.

Kommunikationselemente, die für die Identifikation der Markiereinheit verwendbar sind bzw. verwendet werden, können im laufenden Betrieb auch nicht geändert werden. Sie sind vorzugsweise jedoch für jede der in demselben System (Vorrichtung) verwendeten mehren Markiereinheiten einmalig und bei der Einbindung neuer Markiereinheiten in die Vorrichtung einstellbar. Die Kombination der Kommunikationselemente ist in jeder Markiereinheit des Systems aber einstellbar anders und bildet eine Art Kodierung, mit der die Markiereinheit in dem System eindeutig identifizierbar ist. Die in einem System eingerichteten Kombinationen von Kommunikationselementen (Kodierungen) sind erfindungsgemäß in der Auswerteeinheit bekannt.

Gemäß der Erfindung sind genau drei der mindestens oder genau fünf Markierungen auf einer ersten Geraden angeordnet und genau zwei der mindestens oder genau fünf Markierungen auf einer zweiten Geraden angeordnet, wobei sich die ersten und zweiten Geraden in einer Markierung schneiden, so dass genau eine gemeinsame Markierung sowohl zu der ersten also auch der zweiten Geraden gehört. Erfindungsgemäß finden sich auf der ersten und der zweiten Geraden keine weiteren Markierungen. Mit anderen Worten sind auf der ersten und der zweiten Geraden insgesamt genau vier Markierungen vorgesehen, die einer gemeinsamen, durch die beiden Geraden aufgespannten Ebene liegen, wobei sich auf der ersten Geraden genau drei Markierungen und auf der zweiten Geraden genau zwei Markierungen befinden. Vorzugsweise schneiden sich die erste und die zweite Gerade genau in einem rechten Winkel.

Eine besonders bevorzugte Ausgestaltung dieser vorbeschriebenen Anordnung sieht vor, dass eine erste gerade Linie, die die Markierungen auf der ersten Geraden verbindet, und eine zweite gerade Linie, die die Markierungen auf der zweiten Geraden verbindet, eine T-Form bilden, wobei die erste Linie kürzer ist als die zweite Linie. Besonders bevorzugt bilden die erste und die zweite Linie eine echte T-Form, indem die erste und die zweite Linie senkrecht aufeinander stehen. In einer bevorzugten Ausführungsform trifft die zweite Linie die erste Linie genau in der Mitte. Mit anderen Worten bilden dieser Ausführungsform die erste Linie den horizontalen T-Schenkel und die zweite Linie den vertikalen T-Schenkel, und die gemeinsame Markierung liegt in der Mitte der ersten Linie und an einem Ende der zweiten Linie.

Die Randmarkierungen der ersten geraden Linie, die auf der ersten Geraden liegen, werden als erste und zweite äußere Markierung bezeichnet. Zwischen der ersten äußeren Markierung und der zweiten äußeren Markierung liegt die mittlere Markierung der ersten geraden Linie, die auch die gemeinsame Markierung bildet, optional genau in der Mitte. Die gemeinsame Markierung liegt entsprechend im Schnittpunkt der ersten und der zweiten Geraden.

Die Randmarkierungen der zweiten geraden Linie, die auf der zweiten Geraden liegen, werden als erste und zweite Endmarkierung bezeichnet. Die gemeinsame Markierung ist die erste Endmarkierung, die am gegenüberliegenden Ende der zweiten geraden Linie liegende Markierung ist die zweite Endmarkierung.

Die erste und die zweite Linie, die miteinander verbunden sind, verbinden alle Markierungen sowie ggf. Kommunikationselemente auf den ersten und zweiten Geraden. Entsprechend liegen die Markierungen sowohl auf der jeweiligen Linie als auch auf den jeweiligen Geraden. Anders als die im mathematischen Verständnis unendlichen langen Geraden enden die jeweiligen Linien aber in den Randmarkierungen. Sofern es auf diese Eigenschaft nicht ankommt, werden die Begriffe "erste und zweite Linie" und "erste und zweite Gerade" auch synonym verwendet; die Linien sind jeweils Abschnitte der Geraden.

In Fortführung dieses vorbeschriebenen Erfindungsgedankens liegt mindestens eine ausgezeichnete Markierung der mindestens oder genau fünf Markierungen weder unmittelbar auf einer der ersten oder zweiten Geraden noch ist diese ausgezeichnete Markierung außerhalb einer durch die erste und zweite Geraden aufgespannten Ebene in der Weise angeordnet ist, dass eine senkrechte Projektion der ausgezeichneten Markierung in die Ebene auf einer dieser Geraden liegt. Mit einer senkrechten Projektion auf die Ebene ist eine Projektion in der Richtung der Flächennormalen gemeint, also einer senkrecht auf der Ebene stehenden Geraden. Durch eine solche Markierung, die nicht einer der Geraden zugeordnet ist, kann die Genauigkeit bei der Lage- und Positionsbestimmung bei einfacher algorithmischer Erkennung dieser ausgezeichneten Markierung verbessert werden.

Eine besonders gute der Lage- und Positionsbestimmung lässt sich erreichen, wenn die mindestens eine ausgezeichnete Markierung oberhalb der durch die erste und zweite Gerade aufgespannten Ebene angeordnet ist.

Bei der bevorzugten Variante der Erfindung mit genau fünf Markierungen auf der Markiereinheit gibt es entsprechend genau eine ausgezeichnete Markierung.

Die erfindungsgemäße Anordnung der ausgezeichneten Markierung kann bevorzugt asymmetrisch in Bezug auf die zweite Gerade sein. Entsprechend einer konkreten Ausgestaltung der Erfindung wird als bevorzugte Variante vorgeschlagen, dass die ausgezeichnete Markierung bzw. die Projektion der ausgezeichneten Markierung in die Ebene in einem ersten Abstand zu der mittleren Markierung der ersten Gerade (d.h. der gemeinsamen Markierung, die mit der mittleren Markierung der ersten Gerade zusammenfällt) und in einem zweiten Abstand zu einer ersten der äußeren Markierungen der ersten Gerade angeordnet ist, wobei der erste Abstand und der zweite Abstand jeweils kleiner ist als der Abstand zwischen der ersten äußeren Markierung und der mittleren Markierung entlang der ersten Geraden.

Die senkrechte Projektion der ausgezeichneten Markierung in die Ebene fällt im Sinne der Erfindung mit der Markierung zusammen, wenn die Markierung selbst in der Ebene angeordnet ist. Dies hat zur Folge, dass die Markierung oder die Projektion der Markierung in die Ebene - bezogen auf die zweite Gerade - immer auf der Seite der ersten äußeren Markierung liegt. Mit anderen Worten liegt die ausgezeichnete Markierung immer in der Hälfte der durch die zweite Gerade geteilten Ebene, in der auch die erste äußere Markierung liegt. Dies erzeugt eine Asymmetrie bezogen auf die zweite Gerade.

Diese Asymmetrie in der Markiereinheit kann bei der Ermittlung von Position und Lage der ausgezeichneten Markierung vorteilhaft ausgenutzt werden, um mögliche Markiereinheiten in dem aufgenommenen Bild schnell und mit hoher Erkennungsrate zu erkennen und so dazu beizutragen, die richtige Lage und Position der Markiereinheit besonders schnell und zuverlässig zu ermitteln. Dies wird später noch näher erläutert.

Dabei kann der der erste Abstand und der zweite Abstand vorzugsweise gleich sein. Dies bedeutet, dass der erste und der zweite Abstand kleiner als der Abstand zwischen der ersten äußeren Markierung und der mittleren Markierung und größer als der halbe Abstand zwischen der ersten äußeren Markierung und der mittleren Markierung ist. In der Praxis werden der erste und der zweite Abstand mindestens so groß gewählt werden, dass die gesamte Fläche der ausgezeichneten Markierung außerhalb eines Bereichs um die erste Gerade liegt, der der Gesamtfläche der Markierung (LED) entspricht. Damit wird erreicht, dass die ausgezeichnete Markierung sich nicht mit einer auf der ersten Geraden liegenden Markierung (bzw. deren senkrechter Projektion) überschneidet. Dies vermeidet Erkennungsprobleme der ausgezeichneten Markierung im aufgenommenen Bild. Dazu trägt auch der gleiche (und damit möglichste Gro-ße) Abstand zwischen der ersten und der mittleren Markierung auf der ersten Linie bei. Insbesondere bei einer Anordnung der ausgezeichneten Markierung oberhalb der durch die erste und zweite Gerade aufgespannte Ebene kann es sonst - je nach Blickwinkel bei der Aufnahme - schneller zu Abdeckungen einzelner Markierungen kommen.

Es ist vorgesehen, dass die Kommunikationselemente, die erfindungsgemäß für die Bestimmung von Lage und Position der Markiereinheit im Algorithmus nicht verwendet werden, auf der zweiten Gerade zwischen den Markierungen angeordnet sind. Vorzugsweise sind alle Kommunikationselemente der Markiereinheit zwischen den genau zwei Markierungen der zweiten Gerade angeordnet. So lassen sich die Kommunikationselemente leicht erkennen und ermöglichen eine besonders einfache Identifizierung der Markiereinheit, ggf. sogar ohne Durchführen einer Lage- und Positionsbestimmung alleine aufgrund einer Auswertung des aufgenommenen Bildes, ohne dass die Lage- und Position der Markiereinheit bestimmt wird. Dies ist insbesondere dann von Vorteil, wenn mehrere Markiereinheiten in einem Bild aufgenommen sind, aber die Lage und Position nur einer bestimmten Markiereinheit von Interesse sind. Durch Anwendung von Kriterien betreffend die Identifikation von Markeiereinheiten können dann in den Bildern erkannte mögliche, aber nicht interessierende Markiereinheiten ausgeschlossen werden, bevor für diese Markiereinheiten eine Lage- und Positionserkennung durchgeführt wird.

In besonders bevorzugten Ausführungsformen der Erfindung können zwischen den beiden Markierungen der zweiten Gerade zwischen fünf bis zehn, vorzugsweise sieben oder acht, Kommunikationselementeinrichtungen vorgehsehen sein, wobei die Markiereinheit vorzugsweise dazu eingerichtet ist, aus den insgesamt vorgesehenen Kommunikationselementrichtungen eine, zwei oder drei als Kommunikationselemente zu aktivieren. Das heißt mit anderen Worten, dass ein bis drei aktive Kommunikationselemente vorgesehen sind.

Je nach Anzahl der aktivierten Kommunikationselementeinrichtungen (d.h. der Kommunikationselemente) können so unterschiedlich vielen Markiereinheiten unterschieden werden. Beispielsweise können bei acht Kommunikationselementeinrichtungen in der Markiereinheit und einem aktivierten Kommunikationselement (d.h. einem Kommunikationselement) so acht verschiedene Markiereinheiten identifiziert werden, und bei acht Kommunikationselementeinrichtungen in der Markiereinheit und zwei aktivierten Kommunikationselementen können achtundzwanzig verschiedene Markiereinheiten identifiziert werden. Damit ist es möglich, in einem System eine entsprechende Anzahl verschiedener Markiereinheiten, die bspw. unterschiedlichen Objekten zugeordnet sind, voneinander zu unterscheiden.

Erfindungsgemäß ist die Auswerteeinheit auch zur Durchführung eines Verfahrens eingerichtet, mit dem die aufgenommenen Bilder ausgewertet sowie die Lage- und Position der Markierungen (und damit auch der einen oder ggf. mehreren Markiereinheiten, die zu den in den Bildern aufgenommenen Markierungen gehören) und die Identität der Markiereinheit(en) bestimmt werden.

Dieses Verfahren ist ausdrücklich auch Gegenstand der hier beschriebenen Erfindung und kann erfindungsgemäß durch eine Auswerteeinheit durchgeführt werden, im Sinne einer Recheneinheit, die zur Durchführung dieses Verfahrens oder einzelner Verfahrensschritte eingerichtet bzw. ausgebildet ist. Die Erfindung bezieht sich auch auf ein Computerprogrammprodukt, mit dem die Schritte des erfindungsgemäßen Verfahrens durchgeführt werden, wenn ein Prozessor der Recheneinheit (respektive der Auswerteeinheit) zur Ausführung des Programmcodes des Computerprogrammprodukts ausgebildet ist.

Aspekte dieses erfindungsgemäßen Verfahrens werden nachfolgend beschrieben. Diese können einzeln oder in beliebiger, fachmännisch sinnvoller Kombination zu einem konkreten Verfahren zusammengestellt werden; alle so zusammengestellten Verfahren sind Gegenstand der Erfindung.

Erfindungsgemäß dem erfindungsgemäß vorgeschlagenen Verfahren werden in dem aufgenommenen Bild alle Markierungen und/oder Kommunikationselemente mittels üblicher Verfahren zur Bildauswertung erkannt und diesen 2-dimensionale Bildkoordinaten zugeordnet. Die 2-dimensionalen Bildkoordinaten (x_{B}, y_{B}) geben die Position einer Markierung oder eines Kommunikationselements in dem von der Bildaufnahmeeinrichtung aufgenommenen Bild der Markiereinheit an und sind die Grundlage für die nachfolgend beschriebene Auswertung des Bildes zum Identifizieren der Markiereinheit und zum Erkennen respektive Bestimmen deren Lage und Position relativ zu der Bildaufnahmeeinrichtung. Üblicher Weise ist eine Bildaufnahmeeinrichtung (Kamera) in bekannter Art und Weise dreidimensional im Raum kalibriert, so dass mit der Lage und Position relativ zu der Bildaufnahmeeinrichtung auch die Lage und Position im Raum bekannt sind. Diese Verfahren zur Kalibrierung von Kameras sind dem Fachmann aus dem Stand der Technik hinreichend bekannt.

Zum Erkennen von Markierungen und/oder Kommunikationselemente in dem aufgenommenen Bild kann entsprechend einer erfindungsgemäß vorteilhaften Ausführungsform vorgesehen sein, dass in dem aufgenommenen Bild alle geraden Linien mit insgesamt genau drei Markierungen und/oder Kommunikationselementen ermittelt werden. Damit ist gemeint, dass alle genau drei angeschalteten und so in dem Bild sicher erkennbaren Leuchtmittel (Markierungen und/oder Kommunikationselemente), die in einer geraden Linie angeordnet sind, in einer Gesamtheit gerader Linien mit drei angeschalteten Leuchtmitteln erfasst werden, unabhängig davon, ob sich bei den Leuchtmitteln um Markierungen oder Kommunikationselemente handelt. Diese Linien werden erfasst und können bspw. als 3-Tupel mit den Bildkoordinaten jeder der genau drei Markierungen / Kommunikationselemente in bspw. einer Liste geführt werden. Ein 3-Tupel beschreibt also eine in dem aufgenommenen Bild erkennbare gerade Linien mit drei Markierungen / Kommunikationselementen. Alle so ermittelten 3-Tupel bilden dann die Gesamtheit gerader Linien. Ein 3-Tupel hat bspw. die Form [x_{B}(1), y_{B}(1); x_{B}(2), y_{B}(2); x_{B}(3), y_{B}(3)], wobei die Zahlen in Klammern jeweils die Nummerierung der erkannten Leuchtmittel (Markierungen / Kommunikationselemente) sind.

Finden sich in dem aufgenommenen Bild mehr als drei Markierungen oder Kommunikationselemente, die auf einer geraden Linie angeordnet sind, gilt jede mögliche Unterkombination mit genau drei Markierungen oder Kommunikationselementen als eine der ermittelten geraden Linien mit genau drei Markierungen / Kommunikationselementen und wird in der Gesamtheit der geraden Linien erfasst, bspw. in die Liste der 3-Tupel aufgenommen.

Im Folgenden werden gerade Linien teilweise der Einfachheit halber nur als Linien bezeichnet. Diese Begriffe werden also synonym verwendet.

Um ein erstes Selektionskriterium für solche Linien aus der Gesamtheit der geraden Linien zu erzeugen, die grundsätzlich als erste und zweite Linien einer Markierungseinrichtung in Frage kommen können, kann gemäß einer Ausführungsform der Erfindung vorgeschlagen werden, aus allen ermittelten geraden Linien, d.h. der Gesamtheit der geraden Linien, mit genau drei Markierungen und/oder Kommunikationselementen solche Linien zu ermitteln, die genau eine gemeinsame Markierung aufweisen. Die so ermittelten geraden Linien können dann einer möglichen Markiereinheit zugeordnet werden, wenn festgestellt wird, dass bei genau einer geraden Linie die gemeinsame Markierung in der Mitte der geraden Linie liegt und bei mindestens einer (oder mehreren) anderen geraden Linie(n) die gemeinsame Markierung an einem Ende der gerade Linie liegt, also eine Randmarkierung darstellt, die mit der ersten Endmarkierung der zweiten Linie identifiziert werden kann.

Dies lässt sich bspw. durch folgendes Vorgehen erreichen: Aus der Zusammenstellung gerader Linien mit einer gemeinsamen Markierung / Kommunikationseinheit werden solche Linien selektiert, bei denen die gemeinsame Markierung / Kommunikationseinheit sich der Mitte befindet. Jede dieser Linien mit mittlerer gemeinsamer Markierung / Kommunikationseinheit wird in Kombination mit allen Linien der Zusammenstellung, bei denen sich die gemeinsame Markierung / Kommunikationseinheit am Ende befindet, als Untergruppe betrachtet. Untergruppen, welche aus zwei oder mehr als zwei Linien (eine mit mittiger gemeinsamer Markierung / Kommunikationseinheit und zumindest eine weitere mit gemeinsamer Markierung / Kommunikationseinheit am Ende), werden als mögliche Markierungseinheit aufgefasst. Sollte sich eine solche eine Untergruppe in weiteren Verlauf als Markierungseinheit herausstellen, so ist die gemeinsame Markierung der Untergruppe tatsächlich eine Markierung und kein Kommunikationselement.

Liegt die gemeinsame Markierung in der Mitte der geraden Linie, kann die gerade Linie der ersten Geraden zugeordnet werden. Liegt die Markierung am Ende der geraden Linie, kann die gerade Linie der zweiten Geraden zugordnet. Es ist denkbar, alle geraden Linien, die einer möglichen Markiereinheit nicht zugeordnet werden können, zu verwerfen, bspw. durch Löschen aus der Liste der Gesamtheit der geraden Linien. Je kürzer diese Liste ist, desto schneller geht die Auswertung des aufgenommenen Bilds und die anschließend noch vorzunehmende Lage- und Positionserkennung.

Entsprechend können die anderen geraden Linien, die einer möglichen Markiereinheit zugeordnet wurden bzw. werden konnten, in eine Liste möglicher Markiereinheiten aufgenommen werden, wobei jeweils alle einer möglichen Markiereinheit zugeordneten geraden Linien vorzugsweise in einer ausgewählten Gruppe zusammengefasst werden.

Ein weiteres (zweites) Selektionskriterium, das insbesondere mit dem ersten Selektionskriterium zusammen, ggf. aber auch losgelöst davon anwendbar ist, kann vorsehen, dass insbesondere bei den einer möglichen Markiereinheit zugeordneten geraden Linien eine Untergruppe von geraden Linien bestimmt wird, bei die übereinstimmende Endmarkierungen an ihren beiden Enden aufweisen. Hierbei handelt es sich tatsächlich um Markierungen und nicht um Kommunikationselemente. Eine erste Endmarkierung ist die gemeinsame Markierung, eine zweite Endmarkierung ist die Markierung, die an dem gegenüberliegenden Ende der zweiten Geraden der Markiereinheit angeordnet ist, wobei alle Kommunikationselemente zwischen der ersten Endmarkierung und der zweiten Endmarkierung angeordnet sind. Zwischen den gemeinsamen Endmarkierungen liegt dann genau ein Kommunikationselement je Linie. In einer Ausführungsform der Erfindung, in der nur ein Kommunikationselement vorgesehen ist, enthält die Untergruppe gerade Linien nur eine Linie, bei zwei Kommunikationselementen zwei Linien, und so weiter, wobei die Kommunikationselemente an unterschiedlichen Positionen zwischen den Endmarkierungen positioniert sind, weil die Markiereinheit derart eingerichtet ist, dass verschiedene der Kommunikationselementeinrichtungen angeschaltet bzw. aktiviert sind.

Diese vorbeschriebenen Selektionen sind sinnvoll, um aus allen ermittelten geraden Linien mit insgesamt genau drei Markierungen und/oder Kommunikationselementen eine sinnvolle Vorauswahl von in Frage kommenden möglichen Markiereinheiten zu treffen, die in nachfolgend beschriebenen Schritten bei der Positions- und Lageerkennung weiter betrachtet werden. Weil dieser Schritt rechenintensiver ist als die vorbeschriebene Vorauswahl, ist es sinnvoll, eine solche Vorselektion zu treffen. Es kann aber auch sinnvoll sein, diese Auswahl als erste oder losgelöst von anderen Selektionskriterien auszuführen, weil hierdurch diejenigen geraden Linie selektiert werden, die gemeinsame Markierungen aufweisen, zwischen denen die Kommunikationselemente angeordnet sind. Es kann erfindungsgemäß vorgesehen sein, aus der Gesamtheit solcher Linien eine Anordnung von Kommunikationselementen zusammen mit der Länge der zweiten Linie, d.h. dem Abstand zwischen der ersten und zweiten Endmarkierungen der zweiten Linie, zusammenzustellen, bspw. in Form eines auf die Länge der zweiten Linie normierten eines n-Tupels, und aus einer derartigen Kodierung der Kommunikationselemente eine Identifikation der Markiereinheit abzuleiten durch Vergleich mit in dem System (der Vorrichtung) insgesamt zugelassenen Kodierungen von Kommunikationselementen. Dies kann erfolgen, bevor eine Lage- und Positionserkennung durchgeführt wird. So können nach Identifikation der Markiereinheiten diejenigen verworfen und bspw. aus der Liste der möglichen Markiereinheiten (auch als ausgewählte Gruppe bezeichnet) gestrichen werden, die bei der gerade durchgeführten Lage- und Positionserkennung nicht interessieren. Auch dies erhöht die Auswertgeschwindigkeit enorm.

Um die einzelnen Markierungen in dem aufgenommenen Bild zu identifizieren, kann erfindungsgemäß vorgesehen werden, jeweils die Randmarkierungen von zwei der ermittelten geraden Linien als vorläufige Markierungen einer Markiereinheit anzunehmen. Wenn die zuvor beschriebene Selektion ganz oder teilweise stattgefunden hat, kann die Anzahl der angenommenen Markiereinheiten, für die dieser Selektionsschritt durchgeführt werden muss, signifikant weiter reduziert werden, bspw. auf Kombinationen von geraden Linien mit einer gemeinsamen Markierung ("mögliche Markiereinheit"). Für die zweite Gerade können zusätzlich die beiden Endmarkierungen vorausgewählt sein, wobei als zusätzlich angewandtes Kriterium ergänzend überprüft werden kann, dass eine der Endmarkierungen mit der gemeinsamen Markierung übereinstimmt. Für die erste Gerade kann als zusätzliches Kriterium angewandt werden, dass die gemeinsame Markierung zwischen den äußeren Markierungen angeordnet ist.

Durch eine Kombination all dieser Selektionsschritte lassen sich ggf. weitere Linien ausschließen.

In der Praxis wird es in der Regel so sein, dass nach einem oder mehreren Selektionsschritten nur noch eine mögliche Markiereinheit übrigbleibt. In diesem Fall kann die weitere Selektion mit anders definierten Selektionsschritten erfindungsgemäß abgerochen werden, und mit einer Zuordnung der einzelnen Markierungen fortgefahren werden. Dies kann als Vorschritt oder erster Schritt für das Durchführen der Lage- und Positionserfassung aufgefasst werden, um optional die Lage- und Positionserkennung zu beschleunigen.

Nach einen einer solchen Vorselektion, bei der eine oder ggf. auch mehrere Markiereinheiten übrig bleiben, kann es erfindungsgemäß sinnvoll sein, die Randmarkierungen der geraden Linie, bei der die gemeinsame Markierung in der Mitte der geraden Linie liegt, der ersten Geraden als erste äußere Markierung und zweite äußere Markierung zuzuordnen, und die Randmarkierungen der geraden Linie, bei der gemeinsame Markierung am Ende der geraden Linie liegt, der zweiten Geraden zuzuordnen, wobei als erste Endmarkierung die gemeinsame Markierung und als zweite Endmarkierung die andere Randmarkierung wählbar ist.

Zur Notation in diesem Text Folgendes: die erste äußere Markierung (als die eine der Randmarkierungen der ersten gerade Linie auf der ersten Geraden) liegt auf in der Draufsicht auf die Markierungsordnung linken Seite der zweiten Geraden (respektive der gemeinsamen Markierung in der Mitte der ersten geraden Linie) und die zweite äußere Markierung (als die andere der Randmarkierungen der geraden Linien auf der ersten Geraden) liegt auf in der Draufsicht auf die Markierungsordnung rechten Seite der zweiten Geraden (respektive der gemeinsamen Markierung in der Mitte der ersten Geraden). Die erste Endmarkierung der zweiten geraden Linie auf der zweiten Geraden entspricht der mittleren Markierung der ersten geraden Linie auf der ersten Geraden und die zweite Endmarkierung der zweiten geraden Linie liegt in der Draufsicht auf der rechten Seite der ersten Geraden. Diese Notation ist willkürlich und entspricht dem später noch dargestellten Ausführungsbeispiel. Technische Funktionen sind damit nicht verbunden.

Ggf. kann, zumindest sofern nach einer oder mehreren der zuvor durchgeführten Selektionen in dem aufgenommenen Bild noch mehr als eine mögliche Markiereinheit zu betrachten sind, versucht werden, eine weitere Selektion anhand der ausgezeichneten Markierung vorzunehmen. Dies wird nachfolgend beschrieben.

Als eine weitere Selektionsmöglichkeit kann erfindungsgemäße in dem aufgenommenen Bild, abhängig von der Anordnung der ausgezeichneten Markierung auf der Markiereinheit, ein Bildbereich festgelegt werden und geprüft werden, ob in dem aufgenommenen Bild eine weitere Markierung mit 2-dimensionalen Bildkoordinaten in diesem Bildbereich zugeordnet ist. Dies ist insbesondere sinnvoll und schnell durchführbar, wenn die Markierungen der ersten Linie (Gerade) bereits identifiziert sind. Grundsätzlich wäre es aber auch denkbar, als ein Selektionskriterium Paare von in dem Bild aufgenommen Markierungen zu wählen, für jedes dieser Paare diese Selektionsmöglichkeit auszuprobieren. Dies ist jedoch zeitwendig. Für den nachfolgend beschriebenen Fall wird daher angenommen, dass eine Vorselektion möglicher Markiereinheiten bereits stattgefunden hat.

Verläuft diese weitere, die ausgezeichnete Markierung betreffende Selektion nicht erfolgreich, kann diese mögliche Markiereinheit ausgeschlossen werden. Hierdurch kann ggf. die Anzahl der genauer zu berechnender Markiereinheiten weiter reduziert werden.

Wenn die ausgezeichnete Markierung einen ersten Abstand von der gemeinsamen Markierung und in einen zweiten Abstand von der äußeren Markierung auf der Markiereinheit angeordnet ist, kann der Bildbereich bspw. dadurch festgelegt werden, dass ein erster Kreis mit einem Radius größer als dem ersten Abstand um die gemeinsame Markierung und ein zweiter Kreis mit einem Radius größer als dem zweiten Abstand um die erste äußere Markierung gelegt und der Bildbereich durch die Schnittmenge von erstem oder zweitem Kreis gebildet wird. Der Radius jedes der Kreise kann bspw. durch einen (gemeinsamen oder verschiedenen) Radiusfaktor RF definiert werden, wobei der Radiusfaktor RF größer als eins und vorzugsweise keiner als drei gewählt wird, besonders bevorzugt kleiner als zwei. Gemäß einer bevorzugten Ausführungsform kann der Radiusfaktor auch von der Höhe abhängen, in der die ausgezeichnete Markierung über der durch die erste und die zweite Gerade aufgespannten Ebene angeordnet ist. Je größer diese Höhe ist, desto größer sollte der Bildbereich gewählt werden, weil sich die Projektion der ausgezeichneten Markierung relativ zu der Projektion der ersten äußeren Markierung und der gemeinsamen Markierung umso weiter verschieben kann, insbesondere wenn die Aufnahme aus einem großen Winkel relativ zu der Oberflächennormalen erfolgt. Ein genaues Festlegen eines geeigneten Bildbereichs kann der Fachmann, bspw. softwareseitig, in Abhängigkeit von den geometrischen Gegebenheiten vornehmen.

Sollten (insbesondere nach Vornahme der vorbeschriebenen, optional gemeinsam oder teilweise durchgeführten Selektionen) mehrere mögliche Markiereinheiten bleiben, kann dies daran liegen, dass in dem aufgenommenen Bild mehrere verschieden Markiereinheiten abgebildet sind, die durch die Bildaufnahmeeinrichtung zusammen aufgenommen wurden, oder dass bei der Selektion der möglichen Markiereinheiten einzelne Markierungen nicht richtig zugeordnet wurden bzw. überhaupt keine Selektion durchgeführt wurde.

Erfindungsgemäß wird dann für alle (nach einer Selektion mit einem oder mehreren Selektionskriterien verbliebenen oder ohne Selektion tatsächlich alle) Markierungen eine Lage- und Positionserkennung durchgeführt, und dabei die Lage und Position der Markiereinheit bestimmt. Erfindungsgemäß bevorzugt ist eine auf Basis der als vorläufige Markierungen einer möglichen Markiereinheit durchgeführte Lage- und Positionserkennung, weil hierdurch die Auswertegeschwindigkeit insgesamt signifikant erhöht wird.

Bei der Lage- und Positionsbestimmung werden die (in einer realen Markiereinheit) bekannten Positionen der Markierungen als Randbedingungen mitverwendet. Geeignete Algorithmen sind dem Fachmann aus dem Stand der Technik bekannt. Grundsätzlich sind hier alle bekannten Algorithmen geeignet. Um in einem zweidimensionalen Bild mit einer kalibrierten Kamera (im Sinne einer optischen Bilderfassungseinheit der Erfindung) aufgenommenen Markierungen auf die Position und Lage der Markierungseinordnung im Raum zurückzurechnen, zählen Lösungsverfahren wie P3P (Perspective-3-Point), insbesondere bekannte algebraische Lösungsalgorithmen für das perspektivische 3-Punkt-Problem (AP3P-Verfahren) oder iterative Lösungsalgorithmen für das perspektivische 3-Punkt-Problem (iterative P3P), die dem hier einschlägigen Fachmann bekannt sind und bspw. in den Veröffentlichungen AP3P : Tong Ke and Stergios Roumeliotis. An efficient algebraic solution to the perspective-three-point problem. In Computer Vision and Pattern Recognition (CVPR), 2017 IEEE Conference on. IEEE, 2017, P3P: Xiao-Shan Gao, Xiao-Rong Hou, Jianliang Tang, and Hang-Fei Cheng. Complete solution classification for the perspective-three-point problem. Pattern Analysis and Machine Intelligence, IEEE Transactions on, 25(8):930-943, 2003 beschrieben sind. Diese bekannten Algorithmen finden, sofern die zuvor definierten und bekannten Randbedingungen eingehalten sind, die Position und Lage eines Objekts im Raum aus den Korrespondenzen von bekannten Relationen zwischen Markierungen auf dem Objekt und deren zweidimensionaler Aufnahme in dem Bild einer kalibrierten Kamera.

Um diese Algorithmen robuster gegen Ausreißer in der Punktrekonstruktion in den Bildern zu machen (d.h. auch möglicherweise falsch erkannte oder zugewiesene Markierungen), können an sich bekannte Verfahren zur numerischen Optimierung eingesetzt werden, um die Lage- und Positionserkennung zu verbessern.

Die Anwendung derartiger Verfahren ist dem Fachmann bekannt. Sie können in der beschriebenen Weise auf die vorliegende Erfindung angewandt und ggf. im Rahmen einer fachmännischen Optimierung angepasst werden.

Gemäß einer bevorzugten Variante des Verfahrensschritts zur Bestimmung der Lage und Position kann vorgesehen sein, eine erste vorläufige Lage- und Positionserkennung mit vier der mindestens fünf Markierungen durchgeführt wird. Anhand der vorläufig ermittelten Lage und Position der Markiereinheit erwartete Bildkoordinaten für die fünfte der fünf Markierungen werden dann in dem aufgenommenen Bild ermittelt und mit der tatsächlich zugeordneten Bildkoordinaten dieser Markierung verglichen. Stimmen die Positionen der aus dem Bild ermittelten und der erwarteten Bildkoordinaten innerhalb vorgegebener Schwellwerte überein, wird die Lage- und Positionserkennung beendet und die Lage- und Position der Markierungen bzw. der Markiereinheit ausgegeben.

Gemäß einer alternativen bevorzugten Variante kann eine Positions- und Lageerkennung auch gleich auf der Grundlage aller fünf Markierungen erfolgen, da es eine endliche Anzahl, typischerweise gleich oder kleiner zwei, an unterschiedlichen Anordnungen der fünf Markierungen im einem System gibt. Sollte bei der Auswertung von der falschen Anordnung der Markierungen ausgegangen werden, so wird die Rückrechnung zu großen Abweichungen zwischen erwarteten und bestimmten Bildpunkten führen. In diesem Fall wird die Auswertung mit der anderen möglichen Anordnung wiederholt.

Ggf. kann auch versucht werden, die Lage- und Positionserkennung mittels einer nummerischen Optimierung zu verbessern. Hierbei könnte Vorwissen zur Lage und Position, etwa aufgrund von äußeren Beschränkungen des Systems, genutzt werden, um Startpunkte für eine allgemeine Optimierung zu erhalten, Möglichkeiten hierfür sind im Stand der Technik beschrieben und dem Fachmann bekannt.

Gemäß einer weiteren Ausführungsform kann bei der Durchführung des vorgeschlagenen Verfahrens, wie bereits angedeutet, auch vorgesehen sein, die Identität der Markiereinheit aus dem auf den Abstand zwischen den beiden Markierungen auf der ersten Geraden normierten Abstand zwischen dem Kommunikationselement und einer der beiden Markierungen zu ermitteln. Bei einer bekannten oder einer vorläufig bekannten Lage- und Position der Markierungen (und damit der Markiereinheit) und bekannten möglichen Positionen der potentiell einschaltbaren Kommunikationselementeinrichtungen kann durch einen Vergleich des ermittelten normierten Abstands und des erwarteten normierten Abstands zwischen einer bestimmten Markierung und dem Kommunikationselement auf das aktivierte Kommunikationselement und damit die Identität der Markiereinheit geschlossen werden.

Wenn mehrere Kommunikationselemente aktiviert sind, die geeignet unterscheidbare Gesamtkodierungen ergeben, kann durch Ermittlung und Überlagerung aller Abstände zwischen einer bestimmten Markierung und den Kommunikationselementen eine geeignete Kodierung erzeugt werden, die ggf. auch ohne vorherige Lage- und Positionserkennung allein aufgrund des Musters (respektive der Kodierung) erkennbar und einer Markiereinheit eindeutig zuordenbar ist.

Weitere Vorteile, Merkmale und Anwendungsmöglichkeiten der Erfindung ergeben sich auch aus der nachfolgenden Beschreibung von Ausführungsbeispielen und der Zeichnung.

Es zeigen:
- Fig. 1: eine schematische Darstellung einer Vorrichtung zur Lage- und Positionserkennung von Markierungen gemäß einer Ausführungsform der Erfindung;
- Fig. 2: eine Ausschnittsvergrößerung der in Figur 1 gezeigten Markiereinheit;
- Fig. 3a bis e: Beispielhaft ein Bild 92 der Bildaufnahmeeinrichtung der Vorrichtung gemäß Figur 1 mit erkannten Markierungen und Kommunikationselementen von zwei verschiedenen kodierten Markiereinheiten bei verschiedenen Auswerteschritten; und
- Fig. 4a,: b eine Schemadarstellung zur Identifizierung der Markiereinheit anhand von aufgenommenen Kommunikationselementen.

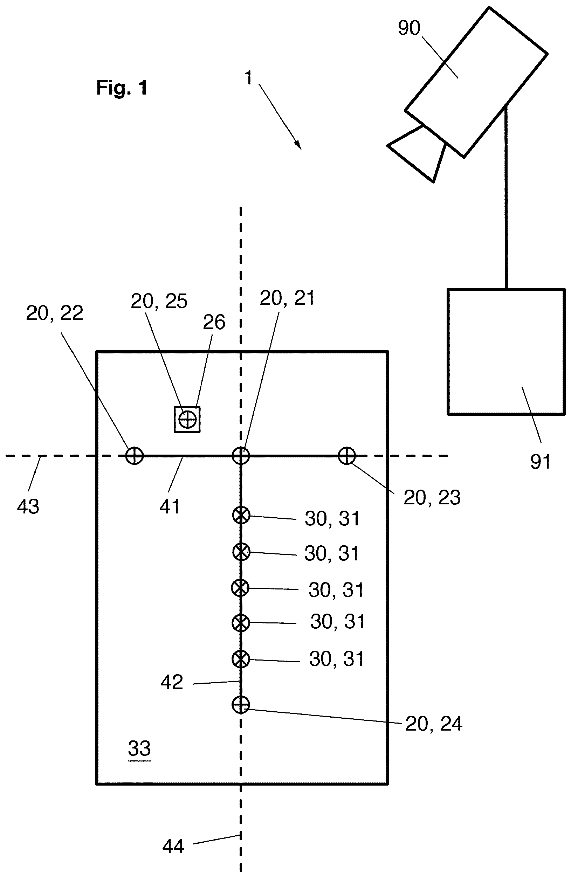

Die in Figur 1 dargestellte Vorrichtung 1 zur Lage- und Positionserkennung von Markierungen 20, 21, 22, 23, 24, 25 im dreidimensionalen Raum auf. Die Markierungen 20, 21, 22, 23, 24, 25 sind auf einer Markiereinheit 10 angeordnet, die an einem Objekt festlegbar ist. Durch Bestimmen der Lage und Position der Markierungen 20, 21, 22, 23, 24, 25 wird somit die Position und Lage der Markiereinheit 10 im Raum sowie ggf. des Objekts bestimmt, an dem die Markiereinheit 10 festgelegt ist. Das Objekt ist in der Zeichnung nicht dargestellt. Die in Figur 1 dargestellte Vorrichtung 1 umfasst eine zweite, identisch aufgebaute Markiereinheit 11, die in Figur 1 der Übersichtlichkeit halber nicht zweimal dargestellt ist.

Die Markierungen 20, 21, 22, 23, 24, 25 werden mit einer optischen Bilderfassungseinheit 90 erfasst, die zur Aufnahme von Bildern 92 der Markiereinheiten 10, 11 mit den Markierungen 20, 21, 22, 23, 24, 25 sowie nachfolgend noch beschriebenen Kommunikationselementen 30, 31 eingerichtet ist. Bei der optischen Bilderfassungseinheit 90 kann es ich um eine Kamera zur Aufnahme von Foto- und ggf. Filmaufnahmen handeln, insbesondere eine dem Fachmann bekannte Digitalkamera. Die Bildaufnahmeeinrichtung 90 ist mit einer Auswerteeinheit 91 verbunden, zu der die von der Bildaufnahmeeinrichtung 90 aufgenommenen Bilder 92 übertragen werden. Die Auswerteinheit 91 ist dann zur eindeutigen Bestimmung der Lage und der Position der Markiereinheit 10 eingerichtet ist, und zwar durch Auswerten des aufgenommenen Bilds 92 unter Erkennen der Markierungen 20, 21, 22, 23, 24, 25. Dabei werden in dem aufgenommenen Bild 92 aus den Markierungen 20, 21, 22, 23, 24, 25 die Lage und Position der Markiereinheit 10, 11 bestimmt, und aus den Kommunikationselementen 30, 31 die Identität der Markiereinheit 10, 11 bestimmt.

Die in Figur 1 dargestellte Markiereinheit 10, 11 gemäß einer besonders bevorzugten Ausführungsform weist genau fünf Markierungen 20, nämlich die Markierungen 21, 22, 23, 24, 25 zur Lage- und Positionsbestimmung und fünf Kommunikationselemente 30, 31 auf, die zur Kodierung verwendet werden können und dem Identifizieren der Markiereinheiten 10, 11 dienen. Die Markierungen 20, 21, 22, 23, 24, 25 sowie die Kommunikationselemente 31 sind jeweils aktivierte bzw. angeschaltete Leuchtmittel, insbesondere LEDs oder Infrarot-LEDs. Je nachdem, ob es sich bei dem aktivierten Leuchtmittel um eine Markierung 20, 21, 22, 23, 24, 25 oder um ein Kommunikationselement 31 handelt, werden diese an- und ausschaltbaren Leuchtmittel auch als Markierungseinrichtung oder als Kommunikationselementeinrichtung 30 bezeichnet. Im eingeschalteten (d.h. optisch aktiven) Zustand sind die Markierungseinrichtungen die Markierungen 20, 21, 22, 23, 24, 25 und die Kommunikationselementeinrichtungen 30 die Kommunikationselemente 31.

In der bevorzugten Ausführungsform weist die Markiereinheit 10 genau fünf Markierungseinrichtungen auf, die bei jeder in der Vorrichtung 1 eingebundenen und im Betrieb befindlichen Markiereinheit 10, 11 auch eingeschaltet sind und somit (optisch aktive) Markierungen 20 bilden. Im Folgenden werden die Markierungen allgemein mit dem Bezugszeichen 20 bezeichnet, wenn nicht eine spezielle Markierung 21, 22, 23, 24, 25 gemeint ist, wie nachstehend noch erläutert.

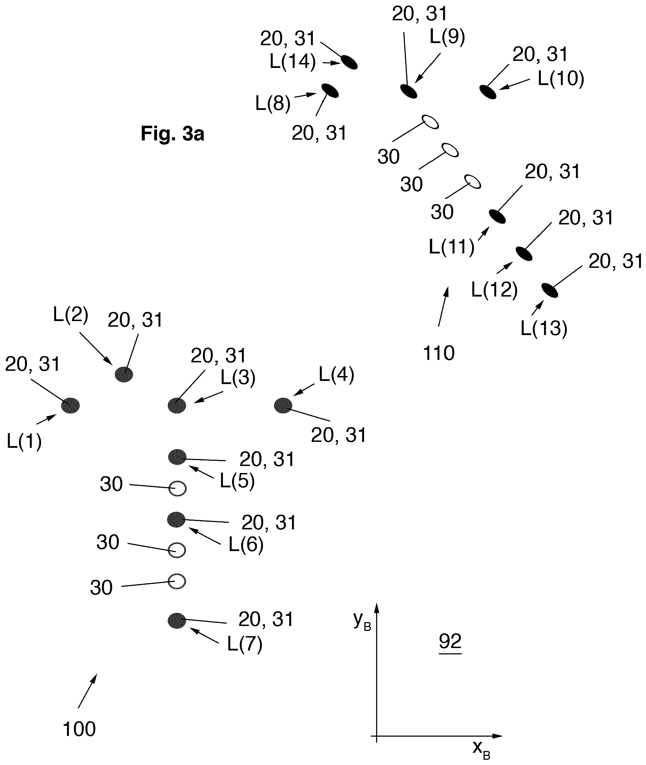

In der Darstellung gemäß Figur 1 sind insgesamt fünf Kommunikationselementeinrichtungen 30 vorgesehen, von denen in der Darstellung gemäß Figur 1 auch alle als Kommunikationselemente 31 einschaltet sind. Dies ist weniger ein regulärer Betriebszustand der Markiereinheiten 10, 11 als eher ein Testbetrieb. Reguläre Betriebszuständen ergeben sich insbesondere aus den Figuren 3a bis 3e.

Im Folgenden werden Kommunikationselementeinrichtungen mit 30 bezeichnet und Kommunikationselemente, d.h. eingeschalte Kommunikationselementeinrichtungen, mit 31. Nicht eingeschaltete Kommunikationselementeinrichtungen 30 sind in nachfolgenden Figuren als Kreis ohne Kreuz dargestellt. In der Bilderfassungseinheit 90 werden diese ausgeschalteten Kommunikationselementeinrichtungen 30 nicht sicher erfasst, und in Auswerteeinheit 91 in jedem Fall nicht berücksichtigt, selbst falls sie optisch sichtbar sein sollten. Sofern die Vorrichtung 1 mehrere (an sich bspw. baugleiche) Markiereinheiten 10, 11 aufweist, sind im Betrieb für jede der Markiereinheiten 10, 11 unterschiedliche Kommunikationselemente 31 vorgesehen, d.h. verschiedene angeschaltete Kommunikationselementeinrichtungen 30.

Die bildliche Unterscheidung von Markierungseinrichtungen und Markierungen 20 sind nicht notwendig, weil gemäß der bevorzugten Ausführungsform gerade genau fünf Markierungseinrichtungen vorgesehen sind, die im Betrieb auch angeschaltet sind, d.h. Markierungen 20 bilden. Daher ist für ausgeschaltete Markierungseinrichtungen kein eigens Bezugszeichen gewählt.

In der speziellen Anordnung der Markierungen 20 sind genau drei Markierungen 21, 22, 23 auf einer ersten Geraden 43 angeordnet und genau zwei Markierungen 21, 24 auf einer zweiten Geraden 44 angeordnet, wobei sich die ersten und zweiten Geraden 43, 44 in der gemeinsamen Markierung 21 schneiden. Die gemeinsame Markierung 21 gehört also sowohl zu der ersten also auch der zweiten Geraden 43, 44. Die Markierungen 21, 22, 23 auf der ersten Geraden 43 sind durch eine erste (gerade) Linie 41 und die Markierungen 21, 24 auf der zweiten Geraden 44 durch eine zweite (gerade) Linie 42 verbunden, wobei die beiden Linien 41, 42 eine T-Form bilden. Die erste Linie 41 kürzer ist als die zweite Linie 42 und die zweite Linie 42 trifft die erste Linie 42 in der hier dargestellten Ausführungsform genau in der Mitte. Dies ist erfindungsgemäß jedoch nicht unbedingt notwendig.

Die in der Darstellung links der zweiten Geraden 44 gezeigte Markierung 22 wird zur genauen Bezeichnung nachfolgend als erste äußere Markierung 22 der ersten Linie 41 bezeichnet, und die in der Darstellung rechts der zweiten Geraden 44 gezeigte Markierung 23 wird zur genauen Bezeichnung nachfolgend als zweite äußere Markierung 23 der ersten Linie 41 bezeichnet. In deren Mitte liegt die gemeinsame Markierung 21, in dem dargestellten Beispiel in gleichem Abstand von der von der ersten und der zweiten äußeren Markierung 22, 23. Die gemeinsame Markierung 21 bildet gleichzeitig also die mittlere Markierung der ersten Linie 41 und erste Endmarkierung der zweiten Linie 42. Gegenüberliegend wird die zweite Linie 42 durch die zweite Endmarkierung 24 begrenzt.

Eine weitere Markierung 20, nämlich die ausgezeichnete Markierungen 25, ist oberhalb der durch die erste und zweite Gerade 43, 44 aufgespannten Ebene 33 angeordnet, und zwar so, dass eine senkrechte Projektion der ausgezeichneten Markierung 25 in die Ebene 33 auf keiner dieser Geraden 43, 44 liegt.

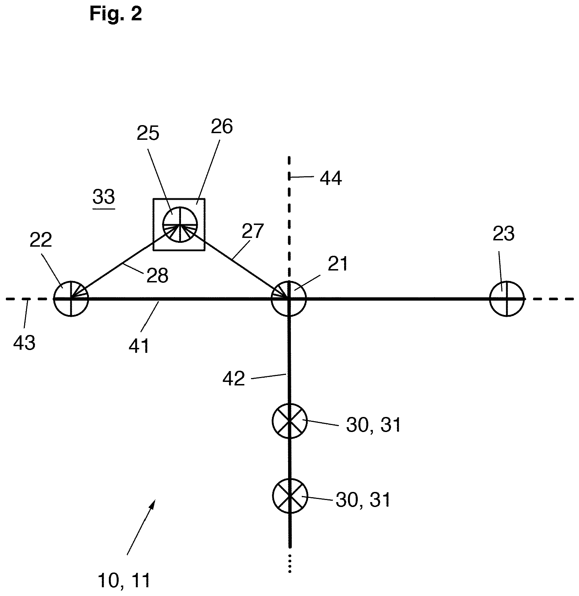

Die genaue Anordnung der ausgezeichneten Markierung 25 wird anhand der Figur 2 erläutert, die einen vergrößerten Ausschnitt der Markierungen 20 im Bereich um die gemeinsame Markierung 21 zeigt. Die oberhalb der Ebene 33 befindliche ausgezeichnete Markierung 25 ist gegenüber den anderen in der Ebene 33 liegenden Markierungen 21, 22, 23, 24 durch einen Dom 26 erhöht. In der in Figur 2 dargestellten Draufsicht in Normalenrichtung auf die Ebene 33 liegt die senkrechte Projektion der ausgezeichneten Markierung 25 in die Ebene 33 genau unter der Markierung 25 und ist nicht mit einem eigenen Bezugszeichen verstehen.

Der erste Abstand 27 zwischen der gemeinsamen Markierung 21 zu der senkrechten Projektion der ausgezeichneten Markierung 25 und der zweite Abstand 28 zwischen der ersten äußeren Markierung 22 zu der senkrechten Projektion der ausgezeichneten Markierung 25 ist in diesem Beispiel gleich, wobei der Abstand 27, 28 größer ist als der halbe Abstand zwischen den Markierungen 21, 22 und kleiner ist als der Abstand zwischen den Markierungen 21, 22. In der Darstellung liegt die ausgezeichnete Markierung 25 auf der der zweiten Linie 42 abgewandten Seite der ersten Line 41.

Die Kommunikationselementeinrichtungen 30, und entsprechend die Kommunikationselemente 31 als angeschaltete Kommunikationselementeinrichtungen 30, liegen alle auf der zweiten Linie 42 zwischen der gemeinsamen Markierung 21 (auch als erste Endmarkierung der zweiten Linie 42 oder als mittlere Markierung der ersten Linie 41 bezeichnet). Vorzugweise ist der Abstand zwischen den Kommunikationselementeinrichtungen 30 äquidistant. So lassen sich durch Anschalten unterschiedlicher Kommunikationselementeinrichtungen 30 für verschiedene Markiereinheiten 10, 11 verschiedene Muster von Kommunikationselementen 31 erzeugen, die es erlauben, als eine Kodierung die verschiedenen Markiereinheiten 10, 11 in einem Bild zu unterscheiden und respektive zu identifizieren.

In Figur 3a ist ein Bild 92 der Bilderfassungseinheit 90 mit Aufnahmen 100 bzw. 110 von den zwei Markiereinheiten 10 bzw. 11 zu sehen, wobei die Auswerteeinheit 91 diese Markiereinheiten 10, 11 zunächst nicht zuordnen kann. Die Auswerteeinheit 91 erkennt nur Markierungen 20 und/oder Kommunikationselemente 31 als in Figur 2 dunkel dargestellte Lichtpunkte, sowie ggf. schemenhaft ausgeschalte Kommunikationselementeinrichtungen 30, die jedoch nicht weiter erfasst und verarbeitet werden. Bei eingeschalteten Kommunikationselementeinrichtungen 30, d.h. Kommunikationselemente 31, ist das Bezugszeichen 30 der Übersichtlichkeit halber nicht mit dargestellt.

In einem ersten Auswertungsschritt werden in dem aufgenommenen Bild 92 alle Markierungen 20 und/oder Kommunikationselemente 31 als Lichtpunkte L(1) bis L(n) erkannt. Die erkannten Lichtunkte L(n) werden durchnummeriert, wobei jeder Lichtpunkt (n) ein 2-Tupel mit den Bildkoordinaten L(n)=[x_{B}(n), y_{B}(n)] zugeordnet wird. Dieses Ergebnis mit den erkannten Markierungen 20 / Kommunikationselementen 31 als Lichtpunkte L(n) ist in Figur 3a eingezeichnet, wobei die Lichtpunkte als L(1) bis L(14) durchnummeriert sind. In den folgenden Figu-ren werden die Bezugszeichen 20, 30, 31 der Übersichtlichkeit halber nicht mehr darstellt.

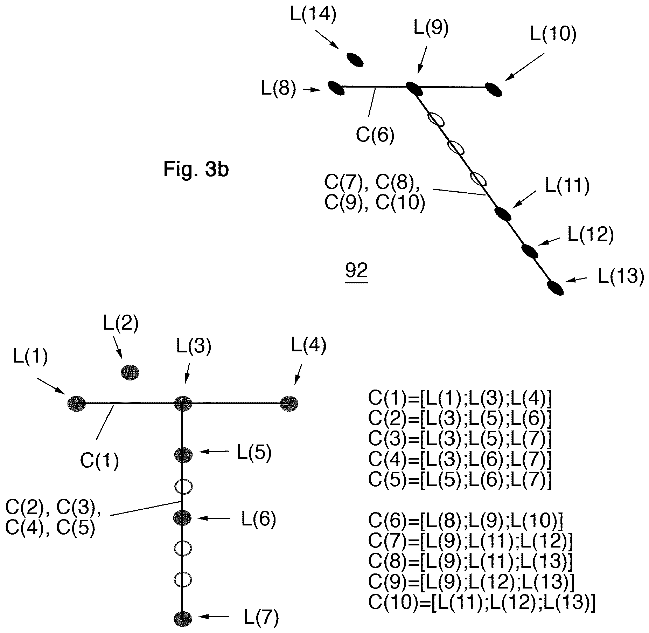

In einem zweiten Auswertungsschritt werden alle geraden Linien C(m) mit insgesamt drei Markierungen 20 und/oder Kommunikationselemente 31 ermittelt. Diese sind in Figur 3b eingezeichnet. Insgesamt können zehn solche Linien C(1) bis C(10) identifiziert werden. Jede dieser Linien wird in ein 3-Tupel mit den jeweiligen Bildkoordinaten der Lichtpunkte L(n) aufgenommen, d.h. in einem konkreten Beispiel enthält die Linie C(1) die 3-Tupel mit den Bildpunkten der Lichtpunkte (L1), L(3) und L(4), d.h. C(1)=[L(1); L(3); L(4)]. Alle gefundenen Linien C(1) bis C(10) sind in Figur 3b als entsprechende 3-Tupel gelistet.

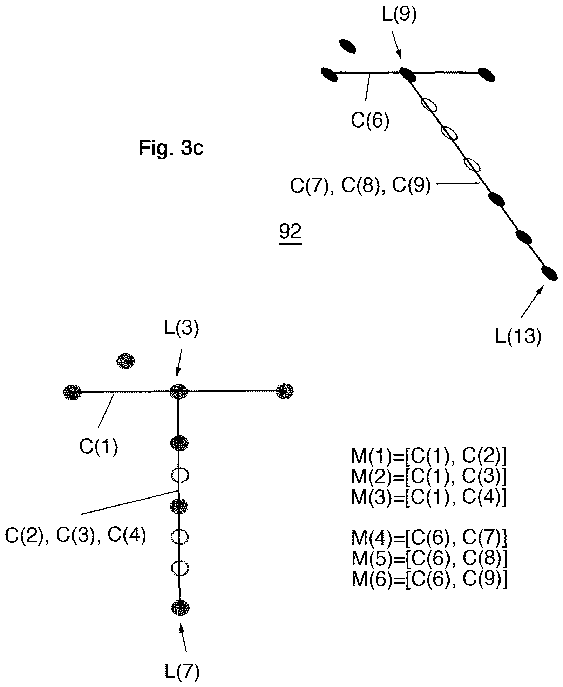

Als nächster Auswerteschritt werden aus allen ermittelten geraden Linien C(n) mit genau drei Markierungen 20 und/oder Kommunikationselementen 31 diejenigen geraden Linien C(n) ermittelt, die genau eine gemeinsame Markierung 20 / Kommunikationselement 31 aufweisen. In dem in Figur 3c dargestellten Beispiel sind dies einmal die Linien C(1), C(2), C(3) und C(4), die jeweils den Lichtpunkt L(3) gemeinsam haben. und einmal die Linien C(6), C(7), C(8) und C(9), die jeweils den Lichtpunkt L(9) gemeinsam haben.

Es werden nun diejenigen Linien C(n) selektiert, bei denen die gemeinsamen Lichtpunkte L(3) respektive L(9) jeweils in der Mitte liegen. Dies sind in dem Beispiel die Linien C(1) und C(6). Zu jeder dieser Linien C(1) und C(6) werden diejenigen Linien gruppiert, bei denen die gemeinsamen Lichtpunkte L(3) respektive L(9) am Rand der Linien liegen. Hieraus ergeben sich in dem dargestellten Beispiel zwei Untergruppen, nämlich die Untergruppe 1 mit den Linien C(1), C(2), C(3), C(4) und die Untergruppe 2 mit den Linien C(6), C(7), C(8) und C(9). Diese Untergruppen kennzeichnen mögliche Markiereinheiten M(o).

In einer von mehreren möglichen Varianten können von diesen Linien in Untergruppen diejenigen Paare einer möglichen Markiereinheit M(o) zugeordnet werden, wenn festgestellt wird, dass bei genau einer geraden Linie C(1) respektive C(6) die gemeinsame Markierung L(3) respektive L(9) in der Mitte der geraden Linie C(1) respektive C(6) liegt und bei mindestens einer anderen geraden Linie (C2), C(3), C(4) respektive C(7), C(8), C(9) die gemeinsame Markierung L(3) respektive L(9) an einem Ende der geraden Linie (C2), C(3), C(4) respektive C(7), C(8), C(9) liegt. Als möglichen Markiereinheiten M(o) im Sinne von 2-Tupeln von Linien c(n) können bspw. die Linienpaare M(1) bis M(6) identifiziert werden, die in Fig. 3c gelistet sind.

In einem weiteren Auswerteschritt können bspw. aus den in den möglichen Markiereinheiten M(o) gelisteten Linien, d.h. den Linien C(1), C(2), C(3), C(4), C(6), C(7), C(8), C(9) diejenigen Linien C(n) als Untergruppe bestimmt werden, die übereinstimmende Endmarkierungen (im Sinne von Markierungen 20 oder Kommunikationselementen 31, d.h. Lichtpunkten L(n)) ausweisen. In dem dargestellten Ausführungsbeispiel sind dies die Linien C(3) und C(4) mit den gemeinsamen Endpunkten L(3) und L(7) und die Linien C(8) und C(9) mit den gemeinsamen Endpunkten L(9) und L(13).

Alle möglichen Markiereinheiten M(o), die nicht eine dieser Linien C(3), C(4), C(8) oder C(9) enthalten, können als mögliche Markiereinheiten M(o) ausgeschlossen werden. Durch diese weitere Selektion verbleiben von den in Figur 3c gelisteten möglichen Markiereinheiten M(1) bis M(6) nur die möglichen Markiereinheiten M(2), M(3), M(5), M(6) übrig. Der letzte Schritt entfällt, bei Markiereinheiten mit nur einem Kommunikationselement 31.

Die vorbeschriebenen Selektionsschritte können natürlich auch zusammengefasst oder in umgekehrter Reihenfolge durchgeführt werden.

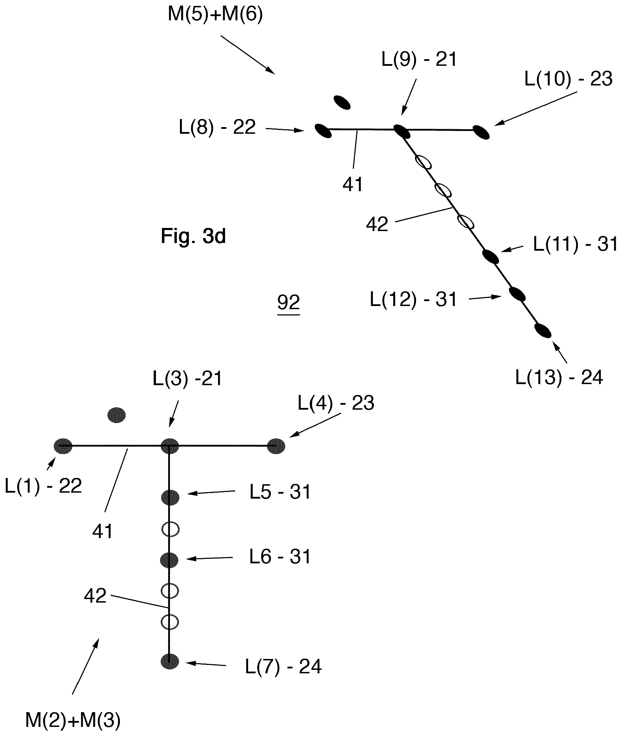

Es ist nun klar, dass bei den verbliebenden möglichen Markiereinheiten M(2), M(3), M(5), M(6) nur noch Linien aufweisen, die an ihren Enden Randmarkierungen 20 als Lichtpunkte L(n) haben. Diese können nun für jede mögliche Markiereinheit den jeweiligen Markierungen 21, 22, 23, 24 zugewiesen werden. Dies ist in Figur 3d dargestellt, in der sich für die möglichen Markiereinheiten M(2)+M(3) und die möglichen Markiereinheiten M(5)+M(6) die jeweils dargestellten Zuordnungen von Lichtpunkten L(n) und Markierungen 21, 22, 23, 24 ergeben.

Das Vorgehen dabei ist grundsätzlich so, dass die Randmarkierungen 22, 23 der geraden Linie 41, bei der die gemeinsame Markierung 21 in der Mitte der geraden Linie 41 liegt, der ersten Geraden 43 als erste äußere Markierung 22 und zweite äußere Markierung 23 zugeordnet werden. Die Randmarkierungen 21, 24 der geraden Linie 42, bei der die gemeinsame Markierung 21 am Ende der geraden Linie 42 liegt, werden der zweiten Geraden 44 zugeordnet, wobei als erste Endmarkierung 21 die gemeinsame Markierung 21 und als zweite Endmarkierung 24 die andere Randmarkierung gewählt werden. Die jeweils verbleibenden Lichtpunkte auf jeder der zweiten Linien 42 sind Kommunikationselemente 31.

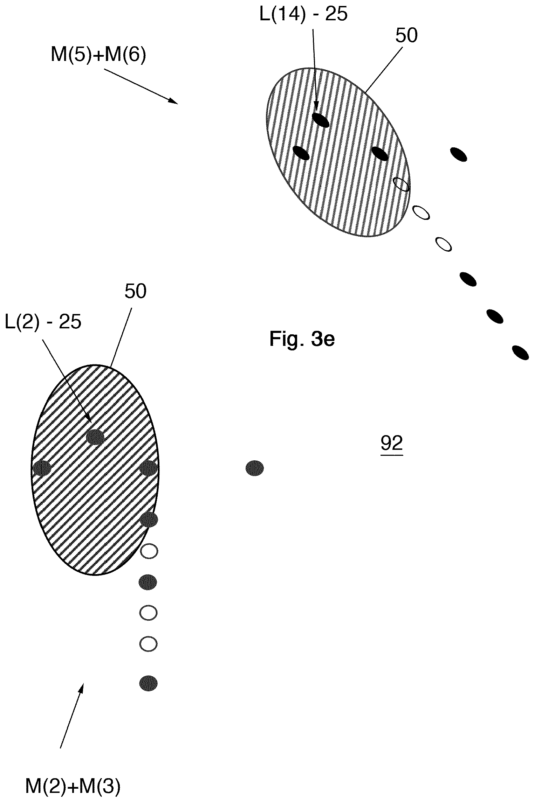

Legt man, wie bereits beschrieben, in geeigneter Weise Kreise mit entsprechend gewählten Radien um die erste äußere Markierung 22 und die gemeinsame Markierung 21, so ergeben sich jeweils durch die Schnittmenge der Kreise ein Bildbereich 50, wie er in Figur 3e skizziert ist. In diesem Bildbereich 50 liegende Lichtpunkte, die noch keiner Markierung 21, 22, 23, 24 oder keinem Kommunikationselement 31 zugewiesen sind, werden in einem folgenden Auswerteschritt der ausgewählten Markierung 25 zugewiesen für die jeweiligen möglichen Markiereinheiten M(2)+M(3) und M(5)+M(6). In dem dargestellten Beispiel sind dies die Lichtpunkte L(2) respektive L(14) für die ausgewählten Markierungen 25.

Anschließend wird mit an sich bekannten Algorithmen in Kenntnis der Markierungen 21, 22, 23, 24, 25 für jede der möglichen Markiereinheit M(2)+M(3) als erster Markiereinheit 10 und der möglichen Markiereinheit M(5)+M(6) als zweiter Markiereinheit 11 die Lage- und Positionsbestimmung durchgeführt. Konkrete Möglichkeiten hierfür wurden in der Beschreibungseinleitung bereits beschrieben und an dieser Stelle nicht wiederholt. Die Anwendung bspw. geeigneter P3P- oder AP3P-Verfahren, ggf. mit anschließender numerischer Optimierung, sind dem Fachmann aus dem Stand der Technik hinlänglich bekannt.

Sollte eine Lage- und Positionserkennung scheitern, wird keine Lösung erzeugt.

Eine Identifikation der Markiereinheiten 10, 11 in dem Bild 92 ist anhand der erkannten Kommunikationselemente 31 auf der zweiten Linie 42 möglich. Dazu kann in einer möglichen Ausführung der Abstand der Kommunikationselemente 31 auf die Gesamtlänge zwischen der ersten Endmarkierung 21 und der zweiten Endmarkierung 22 normiert und den in der Auswerteeinheit 91 hinterlegten bekannten Kodierungen für alle in das System integrierten Markiereinheiten 10, 11 gegenübergestellt werden, in einer entsprechenden Normierung, so dass die Positionen der erfassten Kommunikationselemente 31 mit den erwarteten Positionen aller in der der Auswerteeinheit 91 hinterlegten Kodierungen verglichen werden kann.

Ein hierfür geeignetes und dem Fachmann in der Anwendung bekanntes nummerisches Verfahren ist das Ermitteln der quadratischen Abweichungen zwischen einer erfassten und allen möglichen erwarteten Kodierungen. Die erwartete Kodierung mit der kleinsten quadratischen Abweichung ergibt dann die Kodierung und erlaubt ein Identifizieren der Markiereinheit 10, 11. Sollte ein Konfidenzlevel bei einer derartigen Identifizierung, die kein Durchführen einer Lage- und Positionserkennung erfordert, nicht erreicht werden, kann ein Identifizieren auch nach erfolgter Lage- und Positionserkennung erfolgen, die es erlaubt, mögliche Verzerrungen aus der erfassten Anordnung der Kommunikationselemente 31 herauszurechnen. Dies ist in der Mehrzahl der Anwendungsfälle aber nicht notwendig.

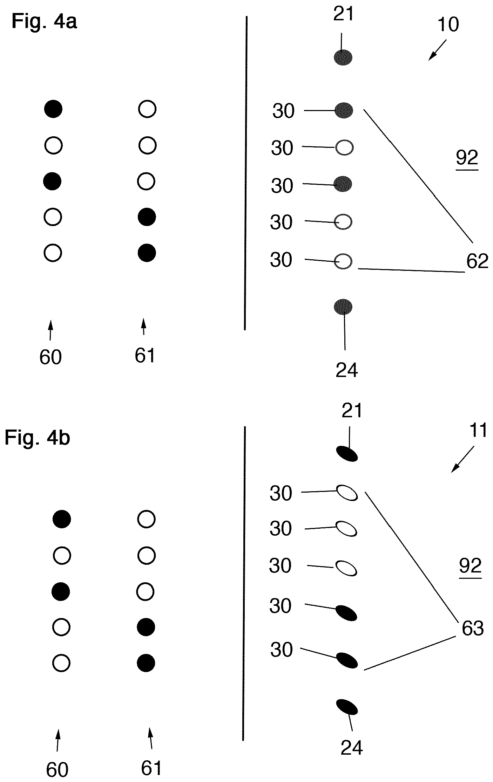

Grafisch anschaulich ist das Vorgehen ohne Durchführen Lage- und Positionserkennung in den Figuren 4a, 4b erläutert für die Aufnahme 100 der Markiereinheit 10 und für die Aufnahme 110 der Markiereinheit 11 entsprechend den in den Figuren 3a bis 3e gezeigten Bildern 92. Es ist angenommen, dass nur die zwei Kodierungen 60, 61 für Markiereinheiten 10, 11 in dem System vorgesehen sind. Diese sind in Figur 4 in derselben Normierung dargestellt wie die für die Markiereinheiten 10, 11 aus den Bilder erkannten Kodierungen 62, 63. Bei den erkannten Kodierungen 62, 63 sind die zur Normierung mit verwendeten ersten und zweiten Endmarkierungen 21, 24 mit dargestellt, die jedoch nicht Teil der erkannten Kodierungen 62, 63 sind und bei dem Vergleich mit den erwarteten Kodierungen 60, 61 nicht berücksichtigt werden,

Figur 4a zeigt die erwarteten Kodierungen 60, 61, die in der die einzelnen Elemente der Kodierung 60, 61 entsprechend der realen Anordnung äquidistant positioniert sind. Bei einer senkrechten Draufsicht auf die Markiereinheit würde genau diese Anordnung auch in dem Bild 92 der Markiereinheit 10 erwartet. Bei einer schrägen Ansicht kommt es zu einer Verzerrung, die zu unterschiedlichen Abständen zwischen den Kommunikationselementeinrichtungen 30 führt. In Figur 4a ist die Verzerrung klein. Die Abstände zwischen den Kommunikationselementeinrichtungen 30 sind kaum unterschiedlich. Es ergibt sich eine klare Zuordnung der in dem Bild 92 erkannten Kodierung 62 zu der erwarteten Kodierung 60.

Figur 4b zeigt in gleicher Weise die erwarteten Kodierungen 60, 61. Aufgrund der deutlichen Schrägansicht kommt es zu einer signifikanten Verzerrung in Figur 4b. Die Abstände zwischen den Kommunikationselementeinrichtungen 30 sind unterschiedlich und werden von unten nach oben in der Darstellung der Kodierung erfassten Kodierung 63 immer kleiner. Dennoch ergibt sich immer noch eine klare Zuordnung der in dem Bild 92 erkannten Kodierung 63 zu der erwarteten Kodierung 61, weil die Abweichungen zu der erwarteten Kodierung 60 noch größer sind. Trotz der Verzerrung ist es also möglich, die Markiereinheit 11 ohne Durchführen einer Positions- oder Lageerkennung zu identifizieren.

### Bezugszeichenliste:

- 1: Vorrichtung
- 10: Auswerteeinheit
- 11: Auswerteeinheit
- 20: Markierungen, umfassend:
- 21: gemeinsame Markierung (je nach Zugehörigkeit zu einer Linie 41, 42 auch als mittlere Markierung der ersten Linie oder als erste Endmarkierung der zweiten Linie bezeichnet)
- 22: erste äußere Markierung
- 23: zweite äußerer Markierung
- 24: zweite Endmarkierung
- 25: ausgezeichnete Markierung
- 26: Dom
- 27: erster Abstand
- 28: zweiter Abstand
- 30: Kommunikationselementeinrichtung, wenn eingeschaltet auch Kommunikationselement
- 31: Kommunikationselement
- 33: Ebene
- 41: erste Linie
- 42: zweite Linie
- 43: erste Gerade
- 44: zweite Gerade
- 50: Bildbereich
- 60: erwartete Markierung der Markiereinheit 10
- 61: erwartete Markierung der Markiereinheit 11
- 62: erkannte Kodierung der Markiereinheit 10
- 63: erkannte Kodierung der Markiereinheit 11
- 90: als Digitalkamera ausgebildete Bilderfassungseinheit
- 91: Auswerteeinheit
- 92: Bild der Auswerteeinheit
- 100: Aufnahme der
- 100: Aufnahme der Markiereinheit 10
- 110: Aufnahme der Markiereinheit 11

## Patentansprüche

1. Vorrichtung zur Lage- und Positionserkennung von Markierungen (20, 21, 22, 23, 24, 25) im dreidimensionalen Raum mit
- mindestens einer Markiereinheit (10, 11) mit mehreren Markierungen (20, 21, 22, 23, 24, 25),
- einer optischen Bilderfassungseinheit (90), die zur Aufnahme von Bildern (92) der Markiereinheit (10, 00) eingerichtet ist, und
- mit einer Auswerteeinheit (91), die zur eindeutigen Bestimmung der Lage und der Position der Markiereinheit (10, 11) eingerichtet ist,
wobei die Markiereinheit (10, 11) mindestens fünf Markierungen (20, 21, 22, 23, 24, 25) zur Lage- und Positionsbestimmung aufweist,
wobei
- genau drei Markierungen (21, 22, 23) auf einer ersten Geraden (43) angeordnet sind und genau zwei Markierungen (21, 24) auf einer zweiten Geraden (44) angeordnet sind, wobei sich die ersten und zweiten Geraden (43, 44) in einer Markierung (21) schneiden, so dass genau eine gemeinsame Markierung (21) sowohl zu der ersten also auch der zweiten Geraden (43, 44) gehört,
- die Markiereinheit (10, 11) mindestens ein Kommunikationselement (31) zur Kodierung der Markiereinheit (10, 11) aufweist,
- die Bilderfassungseinheit (90) dazu eingerichtet ist, ein Bild der Markiereinheit (10, 11) mit den Markierungen (20, 21, 22, 23, 24, 25) und dem mindestens einen Kommunikationselementen (31) aufzunehmen, wobei die Markierungen (20, 21, 22, 23, 24, 25) und das mindestens eine Kommunikationselement (31) jeweils optisch aktive Einrichtungen sind, und
- die Auswerteeinheit (91) dazu eingerichtet ist, in dem aufgenommenen Bild aus den Markierungen (20, 21, 22, 23, 24, 25) die Lage und Position der Markiereinheit (10, 11) zu bestimmen und aus dem mindestens einen Kommunikationselement (31) eine Identität der Markiereinheit (10, 11) zu bestimmen,
**dadurch gekennzeichnet,**
- **dass** das mindestens eine Kommunikationselement (31) auf der zweiten Geraden (44) zwischen den Markierungen (21, 24) angeordnet ist, - dass die Auswerteeinheit (91) weiter dazu eingerichtet ist, in dem aufgenommenen Bild (92) alle Markierungen (20, 21, 22, 23, 24, 25) und Kommunikationselemente (31) zu erkennen und 2-dimensionalen Bildkoordinaten zuzuordnen und keines der Kommunikationselemente (31) zur Lage- und Positionserkennung zu verwenden und
- **dass** mehrere Markiereinheiten (10, 11) vorgesehen sind, die in der Vorrichtung gleichzeitig betreibbar und derart eingerichtet sind, dass diese anhand verschiedener Kommunikationselemente (31) unterscheidbar sind.

2. Vorrichtung nach Anspruch 1, **dadurch gekennzeichnet, dass** eine erste gerade Linie (41), die die Markierungen (21, 22, 23) auf der ersten Geraden (43) verbindet, und eine zweite gerade Linie (42), die die Markierungen (21, 24) auf der zweiten Geraden (44) verbindet, eine T-Form bilden, wobei die erste Linie (41) kürzer ist als die zweite Linie (42) und die zweite Linie (42) die erste Linie (41) vorzugsweise genau in der Mitte trifft.

3. Vorrichtung nach Anspruch 1 oder 2, **dadurch gekennzeichnet, dass** mindestens eine ausgezeichnete Markierung (25) weder unmittelbar auf einer der ersten und zweiten Geraden (43, 44) liegt noch außerhalb einer durch die erste und zweite Geraden (43, 44) aufgespannten Ebene (33) in der Weise angeordnet ist, dass eine senkrechte Projektion der ausgezeichneten Markierung (25) in die Ebene (33) auf einer dieser Geraden (43, 44) liegt.

4. Vorrichtung nach Anspruch 3, **dadurch gekennzeichnet, dass** die mindestens eine ausgezeichnete Markierung (25) oberhalb der durch die erste und zweite Gerade (43, 44) aufgespannten Ebene (33) angeordnet ist.

5. Vorrichtung nach einem der Ansprüche 3 oder 4, **dadurch gekennzeichnet, dass** die ausgezeichnete Markierung (25) und/oder die Projektion der ausgezeichneten Markierung (25) in die Ebene (33) in einem ersten Abstand (27) zu der mittleren Markierung (21) der ersten Gerade (43) und in einem zweiten Abstand (28) zu einer ersten der äußeren Markierungen (22) der ersten Gerade (43) angeordnet ist, wobei der erste Abstand (27) und der zweite Abstand (28) jeweils kleiner ist als der Abstand zwischen der ersten äußeren Markierung (22) und der mittleren Markierung (21) entlang der ersten Geraden (43).

6. Vorrichtung nach Anspruch 5, **dadurch gekennzeichnet, dass** der erste Abstand (27) und der zweite Abstand (28) gleich sind.

7. Vorrichtung nach einem der vorhergehenden Ansprüche, **dadurch gekennzeichnet, dass** zwischen den beiden Markierungen (21, 24) der zweiten Geraden (44) zwischen ein bis drei Kommunikationselemente (31) vorgesehen sind.

8. Vorrichtung nach einem der vorhergehenden Ansprüche, **dadurch gekennzeichnet, dass** die Auswerteeinheit (91) weiter dazu eingerichtet ist, in dem aufgenommenen Bild (92) alle gerade Linien (C) mit insgesamt genau drei Markierungen (20, 21, 22, 23, 24, 25) und/oder Kommunikationselementen (31) zu ermitteln.

9. Vorrichtung nach Anspruch 8, **dadurch gekennzeichnet, dass** die Auswerteeinheit (91) weiter dazu eingerichtet ist, aus allen ermittelten geraden Linien (c) mit genau drei Markierungen (20, 21, 22, 23, 24, 25) und/oder Kommunikationselementen (31) die geraden Linien (C) zu ermitteln, die genau eine gemeinsame Markierung (20, 21, 22, 23, 24, 25) aufweisen, wobei diese geraden Linien (C) einer möglichen Markiereinheit (M) zugeordnet werden, wenn festgestellt wird, dass bei genau einer geraden Linie (C) die gemeinsame Markierung (21) in der Mitte der geraden Linie (C) liegt und bei mindestens einer anderen geraden Linie (C) die gemeinsame Markierung (21) an einem Ende der geraden Linie (C) liegt.

10. Vorrichtung nach Anspruch 8 oder 9, **dadurch gekennzeichnet, dass** die Auswerteeinheit (91) weiter dazu eingerichtet ist, insbesondere bei den einer möglichen Markiereinheit (M) zugeordneten geraden Linien (C) eine Untergruppe von geraden Linien (C) zu bestimmen, die übereinstimmende Randmarkierungen (22, 23; 21, 24) an ihren beiden Enden aufweisen.

11. Vorrichtung nach einem der Ansprüche 8 bis 10, **dadurch gekennzeichnet, dass** die Auswerteeinheit (91) weiter dazu eingerichtet ist, jeweils die Randmarkierungen (22, 23; 21, 24) von zwei der ermittelten geraden Linien (C) als vorläufige Markierungen (M) einer Markiereinheit (10, 11) anzunehmen.

12. Vorrichtung nach Anspruch 11, **dadurch gekennzeichnet, dass** die Auswerteeinheit (91) weiter dazu eingerichtet ist, die Randmarkierungen (22, 23) der geraden Linie (41), bei der die gemeinsame Markierung (21) in der Mitte der geraden Linie (41) liegt, der ersten Geraden (43) als erste äußere Markierung (22) und zweite äußere Markierung (23) zuzuordnen, und die Randmarkierungen (21, 24) der geraden Linie (42), bei der gemeinsame Markierung (21) am Ende der geraden Linie (42) liegt, der zweiten Geraden (44) zuzuordnen, wobei als erste Endmarkierung die gemeinsame Markierung (21) und als zweite Endmarkierung die andere Randmarkierung (24) wählbar ist.

13. Vorrichtung nach Anspruch 12 und einem der Ansprüche 3 bis 6, **dadurch gekennzeichnet, dass** die Auswerteeinheit (91) weiter dazu eingerichtet ist, in dem aufgenommenen Bild (92) einen Bildbereich (50) festzulegen und zu prüfen, ob in dem aufgenommenen Bild (92) eine weitere Markierung (20) mit 2-dimensionalen Bildkoordinaten in diesem Bildbereich (50) angeordnet ist.

14. Vorrichtung nach einem der Ansprüche 11 bis 13, **dadurch gekennzeichnet, dass** die Auswerteeinheit (91) weiter dazu eingerichtet ist, eine erste vorläufige Lage- und Positionserkennung mit vier der mindestens fünf Markierungen (21, 22, 23, 24, 25) durchzuführen sowie anhand der vorläufig ermittelten Lage und Position der Markiereinheit (10, 11) erwartete Bildkoordinaten für die fünfte der fünf Markierungen (21, 22, 23, 24, 25) in dem aufgenommenen Bild (92) zu ermitteln und mit tatsächlich zugeordneten Bildkoordinaten zu vergleichen.

15. Vorrichtung nach einem der vorhergehenden Ansprüche, **dadurch gekennzeichnet, dass** die Auswerteeinheit (91) weiter dazu eingerichtet ist, die Lage- und Positionserkennung mittels einer numerischen Optimierung zu verbessern.

16. Vorrichtung nach einem der vorhergehenden Ansprüche, **dadurch gekennzeichnet, dass** die Auswerteeinheit (91) weiter dazu eingerichtet ist, die Identität der Markiereinheit (10, 11) aus dem auf den Abstand zwischen den beiden Markierungen (21, 24) auf der zweiten Geraden (44) normierten Abstand zwischen dem Kommunikationselement (31) und einer der beiden Markierungen (21, 24) zu ermitteln.

17. Computerprogrammprodukt, mit dem die Auswerteeinheit (91) in einer Vorrichtung (1) nach einem Ansprüche 1 bis 16 zum Ausführen der Maßnahmen eingerichtet wird, zu denen Auswerteeinheit (91) gemäß Anspruch 1 in Kombination mit einem der Ansprüche 8 bis 16 eingerichtet ist, wenn ein Prozessor der Auswerteeinheit (91) zur Ausführung des Programmcodes des Computerprogrammprodukts eingerichtet ist.

## Claims

1. Device for orientation and position detection of markings (20, 21, 22, 23, 24, 25) in three-dimensional space with
- at least one marking unit (10, 11) with several markings (20, 21, 22, 23, 24, 25),
- an optical image capture unit (90) adapted to capture images (92) of the marking unit (10, 00), and
- with an evaluation unit (91) adapted to unambiguously determine the orientation and the position of the marking unit (10, 11),
wherein the marking unit (10, 11) has at least five markings (20, 21, 22, 23, 24, 25) for determining orientation and position,
wherein
- exactly three markings (21, 22, 23) are arranged on a first straight line (43) and exactly two markings (21, 24) are arranged on a second straight line (44), wherein the first and second straight lines (43, 44) intersect in one marking (21) so that exactly one common marking (21) belongs to both the first and the second straight line (43, 44),
- the marking unit (10, 11) has at least one communication element (31) for coding the marking unit (10, 11),
- the image capture unit (90) is adapted to capture an image of the marking unit (10, 11) with the markings (20, 21, 22, 23, 24, 25) and the at least one communication element (31), wherein the markings (20, 21, 22, 23, 24, 25) and at least one communication element (31) are each optically active means, and
- the evaluation unit (91) is adapted to determine the orientation and position of the marking unit (10, 11) in the captured image from the markings (20, 21, 22, 23, 24, 25) and to determine an identity of the marking unit (10, 11) from the at least one communication element (31),
**characterized in that**
- the at least one communication element (31) is arranged on the second straight line (44) between the markings (21, 24),
- the evaluation unit (91) is further arranged to recognize all markings (20, 21, 22, 23, 24, 25) and communication elements (31) in the captured image (92) and to assign to 2-dimensional image coordinates and to not taking in any of the communication elements (31) for the determination of orientation and position and
- several marking units (10, 11) are provided, which are operatable simultaneously in the device and which are adapted such that the marking units (10, 11) can be distinguished on the basis of the various communication elements (31)

2. Device according to claim 1, **characterized in that** a first straight path (41) connecting the markings (21, 22, 23) on the first straight line (43) and a second straight path (42) connecting the markings (21, 24) on the second straight line (44) form a T-shape, wherein the first path (41) is shorter than the second path (42) and the second path (42) preferably meets the first path (41) exactly in the middle.

3. Device according to claim 1 or 2, **characterized in that** at least one distinguished marking (25) neither lies directly on one of said first and second straight lines (43, 44) nor is arranged outside a plane (33) spanned by said first and second straight lines (43, 44) in such a way that a perpendicular projection of said distinguished marking (25) into said plane (33) lies on one of said straight lines (43, 44).

4. Device according to claim 3, **characterized in that** the at least one distinguished marking (25) is arranged above the plane (33) spanned by the first and second straight lines (43, 44).

5. Device according to any one of claims 3 or 4, **characterized in that** the distinguished marking (25) and/or the projection of the distinguished marking (25) into the plane (33) is arranged at a first distance (27) from the middle marking (21) of the first straight line (43) and at a second distance (28) from a first of the outer markings (22) of the first straight line (43), wherein the first distance (27) and the second distance (28) are each smaller than the distance between the first outer marking (22) and the middle marking (21) along the first straight line (43).

6. Device according to claim 5, **characterized in that** the first distance (27) and the second distance (28) are equal.

7. Device according to any of the preceding claims, **characterized in that** from one to three communication elements (31) are provided between the two markings (21, 24) of the second straight line (44).

8. Device according to any of the preceding claims, **characterized in that** the evaluation unit (91) is further adapted to determine in the captured image (92) all straight paths (C) with a total of exactly three markings (20, 21, 22, 23, 24, 25) and/or communication elements (31).

9. Device according to claim 8, **characterized in that** the evaluation unit (91) is further adapted to determine from all determined straight paths (c) with exactly three markings (20, 21, 22, 23, 24, 25) and/or communication elements (31) the straight paths (C) which have exactly one common marking (20, 21, 22, 23, 24, 25), these straight paths (C) being assigned to a possible marking unit (M) if it is determined that for exactly one straight path (C) the common marking (21) is located in the middle of the straight path (C) and for at least one other straight path (C) the common marking (21) is located at one end of the straight path (C).

10. Device according to claim 8 or 9, **characterized in that** the evaluation unit (91) is further adapted to determine, in particular in the case of the straight paths (C) associated with a possible marking unit (M), a subgroup of straight paths (C) having matching edge markings (22, 23; 21, 24) at their two ends.

11. Device according to any one of claims 8 to 10, **characterized in that** the evaluation unit (91) is further adapted to assign the edge markings (22, 23; 21, 24) of two of the determined straight paths (C),respectively, as provisional markings (M) of a marking unit (10, 11).

12. Device according to claim 11, **characterized in that** the evaluation unit (91) is further adapted to assign the edge markings (22, 23) of the straight path (41) to the first straight line (43) as the first outer marking (22) and second outer marking (23), where the common marking (21) lies in the middle of the straight path (41), and to assign the edge markings (21, 24) of the straight path (42), in which the common marking (21) lies at the end of the straight path (42), to the second straight line (44), wherein the common marking (21) is selectable as the first end marking and the other edge marking (24) is selectable as the second end marking.

13. Device according to claim 12 and one of claims 3 to 6, **characterized in that** the evaluation unit (91) is further adapted to define an image area (50) in the captured image (92) and to check whether a further marking (20) with 2-dimensional image coordinates is arranged in this image area (50) in the captured image (92).

14. Device according to any one of claims 11 to 13, **characterized in that** the evaluation unit (91) is further adapted to perform a first preliminary orientation and position detection with four of the at least five markings (21, 22, 23, 24, 25) and to determine expected image coordinates for the fifth of the five markings (21, 22, 23, 24, 25) in the captured image (92) on the basis of the preliminarily determined orientation and position of the marking unit (10, 11) and to compare the expected image coordinates with actually assigned image coordinates.

15. Device according to any one of the preceding claims, **characterized in that** the evaluation unit (91) is further adapted to improve the orientation and position detection by means of numerical optimization.

16. Device according to any one of the preceding claims, **characterized in that** the evaluation unit (91) is further adapted to determine the identity of the marking unit (10, 11) from the distance between the communication element (31) and one of the two markings (21, 24), said distance being normalized to the distance between the two markings (21, 24) on the second straight line (44).

17. Computer program product for adapting the evaluation unit (91) in a device (1) according to any one of claims 1 to 16 to perform the measures to which the evaluation unit (91) is adapted according to claim 1 in combination with any one of claims 8 to 16, when a processor of the evaluation unit (91) is arranged to execute the program code of the computer program product.

## Revendications

1. Appareil de détection de l'emplacement et de la position de repères (20, 21, 22, 23, 24, 25) dans un espace tridimensionnel avec
- au moins une unité de repérage (10, 11) avec plusieurs repères (20, 21, 22, 23, 24, 25),
- une unité optique de saisie d'images (90), qui est agencée pour enregistrer des images (92) de l'unité de repérage (10, 00), et
- avec une unité d'évaluation (91), qui est agencée pour la détermination certaine de l'emplacement et de la position de l'unité de repérage (10, 11),
sachant que l'unité de repérage (10, 11) comporte au moins cinq repères (20, 21, 22, 23, 24, 25) pour la détermination d'emplacement et de position,
sachant que
- exactement trois repères (21, 22, 23) sont situés sur une première droite (43) et exactement deux repères (21, 24) sont situés sur une deuxième droite (44), sachant que la première et la deuxième droite (43, 44) se coupent dans un repère (21) de telle manière qu'exactement un repère commun (21) appartient aussi bien à la première qu'à la deuxième droite (43, 44),
- l'unité de repérage (10, 11) comporte au moins un élément de communication (31) pour la codification de l'unité de repérage (10, 11),
- l'unité de saisie d'images (90) est agencée pour enregistrer une image de l'unité de repérage (10, 11) avec les repères (20, 21, 22, 23, 24, 25) et au moins un élément de communication (31), sachant que les repères (20, 21, 22, 23, 24, 25) et au moins un élément de communication (31) sont respectivement des dispositifs actifs du point de vue optique, et
- l'unité d'évaluation (91) est agencée pour déterminer dans l'image enregistrée l'emplacement et la position de l'unité de repérage (10, 11) à partir des repères (20, 21, 22, 23, 24, 25) et déterminer à partir d'au moins un élément de communication (31) une identité de l'unité de repérage (10, 11),
**caractérisé en ce qu'**
- au moins un élément de communication (31) est disposé sur la deuxième droite (44) entre les repères (21, 24),
- **en ce que** l'unité d'évaluation (91) est en plus agencée pour détecter dans l'image enregistrée (92) tous les repères (20, 21, 22, 23, 24, 25) et les éléments de communication (31) et affecter les coordonnées d'image bidimensionnelles et n'utiliser aucun des éléments de communication (31) pour la détection d'emplacement et de position, et
- **en ce que** plusieurs unités de repérage (10, 11) sont prévues qui peuvent être simultanément utilisées dans l'appareil et sont agencées de manière à ce que celles-ci soient différenciables à l'aide de différents éléments de communication (31).

2. Appareil selon la revendication 1, **caractérisé en ce qu'**une première ligne droite (41), qui relie les repères (21, 22, 23) sur la première droite (43) et une deuxième ligne droite (42), qui relie les repères (21, 24) sur la deuxième droite (44), forment un T, sachant que la première ligne (41) est plus courte que la deuxième ligne (42) et la deuxième ligne (42) rencontre la première ligne (41) de préférence exactement au centre.

3. Appareil selon la revendication 1 ou 2, **caractérisé en ce qu'**au moins un repère remarquable (25) ne se situe ni directement sur une des première et deuxième droites (43, 44), ni n'est disposé en dehors d'un plan (33) tendu à travers la première et la deuxième droite (43, 44) de manière qu'une projection perpendiculaire du repère remarquable (25) se situe dans le plan (33) sur une de ces droites (43, 44).

4. Appareil selon la revendication 3, **caractérisé en ce qu'**au moins un repère remarquable (25) est disposé au-dessus du plan (33) tendu à travers la première et la deuxième droite (43, 44).

5. Appareil selon l'une quelconque des revendications 3 ou 4, **caractérisé en ce que** le repère remarquable (25) et/ou la projection du repère remarquable (25) est disposé dans le plan (33) à une première distance (27) du repère central (21) de la première droite (43) et à une deuxième distance (28) d'un premier des repères extérieurs (22) de la première droite (43), sachant que la première distance (27) et la deuxième distance (28), sont respectivement plus petites que la distance entre le premier repère extérieur (22) et le repère central (21) le long de la première droite (43).

6. Appareil selon la revendication 5, **caractérisé en ce que** la première distance (27) et la deuxième distance (28) sont identiques.

7. Appareil selon l'une quelconque des revendications précédentes, **caractérisé en ce qu'**entre les deux repères (21, 24) de la deuxième droite (44) sont prévus entre un à trois éléments de communication (31).

8. Appareil selon l'une quelconque des revendications précédentes, **caractérisé en ce que** l'unité d'évaluation (91) est en plus agencée pour déterminer dans l'image enregistrée (92) toutes les lignes droites (C) avec au total exactement trois repères (20, 21, 22, 23, 24, 25) et/ou éléments de communication (31).

9. Appareil selon la revendication 8, **caractérisé en ce que** l'unité d'évaluation (91) est en plus agencée pour déterminer à partir de toutes les lignes droites déterminées (C) avec exactement trois repères (20, 21, 22, 23, 24, 25) et/ou éléments de communication (31), les lignes droites (C), qui comportent exactement un repère commun (20, 21, 22, 23, 24, 25), sachant que ces lignes droites (C) sont attribuées à une unité de repérage possible (M), si l'on constate que pour exactement une ligne droite (C) le repère commun (21) se situe au centre de la ligne droite (C) et pour au moins une autre ligne droite (C) le repère commun (21) se situe à une extrémité de la ligne droite (C).

10. Appareil selon la revendication 8 ou 9, **caractérisé en ce que** l'unité d'évaluation (91) est en plus agencée pour déterminer en particulier pour les lignes droites (C) attribuées à une unité de repérage possible (M) un sous-groupe de lignes droites (C), qui comportent les marquages de bord concordants (22, 23 ; 21, 24) à leurs deux extrémités.

11. Appareil selon l'une quelconque des revendications 8 à 10, **caractérisé en ce que** l'unité d'évaluation (91) est en plus agencée pour accepter respectivement les marquages de bord (22, 23 ; 21, 24) de deux des lignes droites (C) déterminées en tant que repères provisoires (M) d'une unité de repérage (10, 11).

12. Appareil selon la revendication 11, **caractérisé en ce que** l'unité d'évaluation (91) est en plus agencée pour attribuer les marquages de bord (22, 23) de la ligne droite (41), pour laquelle le repère commun (21) se situe au centre de la ligne droite (41), à la première droite (43) en tant que premier repère extérieur (22) et deuxième repère extérieur (23) et les marquages de bord (21, 24) de la ligne droite (42) pour laquelle le repère commun (21) se situe à l'extrémité de la ligne droite (42), à la deuxième droite (44), sachant que le repère commun (21) peut être choisi comme premier repère final et l'autre marquage de bord (24) comme deuxième repère final.

13. Appareil selon la revendication 12 et l'une quelconque des revendications 3 à 6, **caractérisé en ce que** l'unité d'évaluation (91) est en plus agencée pour constater et vérifier dans l'image enregistrée (92) un secteur d'image (50), si dans l'image enregistrée (92) un autre repère (20) avec des coordonnées d'image bidimensionnelles est disposé dans ce secteur d'image (50) .

14. Appareil selon l'une quelconque des revendications 11 à 13, **caractérisé en ce que** l'unité d'évaluation (91) est en plus agencée pour effectuer une première détection d'emplacement et de position provisoire avec quatre d'au moins cinq repères (21, 22, 23, 24, 25) ainsi qu'à l'aide de l'emplacement et de la position provisoirement déterminés de l'unité de repérage (10, 11) déterminer les coordonnées d'image attendues pour le cinquième des cinq repères (21, 22, 23, 24, 25) dans l'image enregistrée (92) et comparer aux coordonnées d'image effectivement attribuées.

15. Appareil selon l'une quelconque des revendications précédentes, **caractérisé en ce que** l'unité d'évaluation (91) est en plus agencée pour améliorer la détection d'emplacement et de position au moyen d'une optimisation numérique.

16. Appareil selon l'une quelconque des revendications précédentes, **caractérisé en ce que** l'unité d'évaluation (91) est agencée en plus pour déterminer entre l'élément de communication (31) et un des deux repères (21, 24) l'identité de l'unité de repérage (10, 11) à partir de la distance normalisée sur la distance entre les deux repères (21, 24) sur la deuxième droite (44).

17. Produit-programme informatique avec lequel l'unité d'évaluation (91) dans un appareil (1) selon l'une quelconque des revendications 1 à 16 est agencée pour exécuter des mesures pour lesquelles l'unité d'évaluation (91) est agencée selon la revendication 1 en combinaison avec l'une quelconque des revendications 8 à 16 si un processeur de l'unité d'évaluation (91) est agencé pour exécuter le code de programme du produit-programme informatique.
